(19) 

Europäisches Patentamt
European Patent Office
Office européen des brevets

(11) **EP 4 513 815 A1**

(12) **EUROPEAN PATENT APPLICATION**
published in accordance with Art. 153(4) EPC

(43) Date of publication:
26.02.2025 Bulletin 2025/09

(21) Application number: 23795463.1

(22) Date of filing: 26.04.2023

(51) International Patent Classification (IPC):
*H04L 5/00* (2006.01)   *H04W 74/08* (2024.01)
*H04W 72/04* (2023.01)

(52) Cooperative Patent Classification (CPC):
**H04L 5/00; H04W 72/04; H04W 74/08**

(86) International application number:
**PCT/CN2023/090804**

(87) International publication number:
**WO 2023/208031 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 29.04.2022  CN 202210469122

(71) Applicant: Huawei Technologies Co., Ltd.
Shenzhen, Guangdong 518129 (CN)

(72) Inventors:
• LIU, Xiaoqing
  Shenzhen, Guangdong 518129 (CN)
• YU, Zheng
  Shenzhen, Guangdong 518129 (CN)
• LIU, Jianghua
  Shenzhen, Guangdong 518129 (CN)
• ZHANG, Yongping
  Shenzhen, Guangdong 518129 (CN)

(74) Representative: Grünecker Patent- und
Rechtsanwälte
PartG mbB
Leopoldstraße 4
80802 München (DE)

(54) **SIGNAL TRANSMISSION METHOD AND RELATED APPARATUS**

(57) This application provides a signal transmission method and a related apparatus. The method includes: receiving resource indication information of a reference signal; determining mask information, where the mask information is used to determine one or more of the following information: mask length information, mask length set information, and mask index information; and the resource indication information and the mask information are used to determine a first physical resource, or the resource indication information and the mask information are used to determine a mapping between a sequence of the reference signal and the first physical resource; and determining the first physical resource, and performing transmission of the reference signal on the first physical resource. It can be learned that the first physical resource for the transmission of the reference signal is determined based on the resource indication information and the mask information related to a mask length, to help enable scheduled masks to be orthogonal. This helps increase a quantity of orthogonal ports that can be supported while ensuring that the scheduled masks are orthogonal, so as to increase a quantity of terminal devices that can be scheduled.

Signal transmission method 100

A terminal device receives resource indication information of a reference signal — S101

The terminal device determines mask information, where the mask information is used to determine one or more of the following information: mask length information, mask length set information, and mask index information, and the resource indication information and the mask information are used to determine a first physical resource, or the resource indication information and the mask information are used to determine a mapping between a sequence of the reference signal and the first physical resource — S102

The terminal device determines the first physical resource, and performs transmission of the reference signal on the first physical resource — S103

FIG. 7

EP 4 513 815 A1

## Description

This application claims priority to Chinese Patent Application No. 202210469122.X, filed with the China National Intellectual Property Administration on April 29, 2022 and entitled "SIGNAL TRANSMISSION METHOD AND RELATED APPARATUS", which is incorporated herein by reference in its entirety.

## TECHNICAL FIELD

This application relates to the field of communication technologies, and in particular, to a signal transmission method and a related apparatus.

## BACKGROUND

In a new radio (new radio, NR) system, on a frequency domain resource, a demodulation reference signal (demodulation reference signal, DMRS) sequence is mapped to one subcarrier at an interval of one subcarrier (or the DMRS sequence is mapped to one subcarrier in every two subcarriers), and the DMRS sequence is referred to as a DMRS of a type 1 (type 1); and a DMRS sequence is mapped to two contiguous subcarriers at an interval of four subcarriers (or the DMRS sequence is mapped to two contiguous subcarriers in every six subcarriers), and the DMRS sequence is referred to as a DMRS of a type 2 (type 2). On a time domain resource, a DMRS sequence is mapped to an orthogonal frequency division multiplexing (orthogonal frequency division multiplexing, OFDM) symbol, and the DMRS sequence is referred to as a single-symbol DMRS; and a DMRS sequence is mapped to two OFDM symbols, and the DMRS sequence is referred to as a double-symbol DMRS.

Currently, a single-symbol DMRS of the type 1 can support multiplexing of a maximum of four orthogonal DMRS ports, and a double-symbol DMRS of the type 1 can support multiplexing of a maximum of eight orthogonal DMRS ports. A single-symbol DMRS of the type 2 can support multiplexing of a maximum of six orthogonal DMRS ports, and a double-symbol DMRS of the type 2 can support multiplexing of a maximum of 12 orthogonal DMRS ports.

To increase a quantity of terminal devices scheduled by a network device at the same time, a quantity of orthogonal DMRS ports that can be multiplexed needs to be increased. How to increase a quantity of orthogonal DMRS ports that can be supported while ensuring orthogonality between scheduled DMRSs is still one of problems that urgently need to be studied currently.

## SUMMARY

Embodiments of this application provide a signal transmission method and a related apparatus, to help increase a quantity of orthogonal ports that can be supported while ensuring that scheduled masks are orthogonal, so as to increase a quantity of terminal devices that can be scheduled.

According to a first aspect, an embodiment of this application provides a signal transmission method, which may be applied to a terminal device. The method includes: receiving resource indication information of a reference signal; determining mask information, where the mask information is used to determine one or more of the following information: mask length information, mask length set information, and mask index information; and the resource indication information and the mask information are used to determine a first physical resource, or the resource indication information and the mask information are used to determine a mapping between a sequence of the reference signal and the first physical resource; and determining the first physical resource, and performing transmission of the reference signal on the first physical resource.

The performing transmission of the reference signal may refer to sending the reference signal, or receiving the reference signal. In other words, that the terminal device performs transmission of the reference signal may be that the terminal device sends an uplink reference signal or receives a downlink reference signal.

It can be learned that in embodiments of this application, the first physical resource for transmission of the reference signal is determined based on the resource indication information and the mask information related to a mask length, to help enable a total quantity of scheduled masks to be exactly divided by the mask length regardless of a quantity of resource blocks scheduled by the terminal device, that is, to help enable the scheduled masks to be orthogonal. This helps increase a quantity of orthogonal ports that can be supported while ensuring that the scheduled masks are orthogonal, so as to increase a quantity of terminal devices that can be scheduled.

In an optional implementation, the determining mask information includes: receiving first signaling, and determining the mask information based on the first signaling; or determining the mask information according to a preset rule; or pre-specifying a value of at least one piece of information in the mask information. It can be learned that the terminal device can flexibly determine the mask information.

In an optional implementation, the first signaling includes a first configuration parameter, and the first configuration parameter indicates the mask information; and/or the first signaling does not include a first configuration parameter, and a value of the mask information is a default value. Therefore, the terminal device can determine the mask length based on the first signaling.

In an optional implementation, that the terminal device determines the mask information according to the preset rule includes: determining a configuration type of the reference signal based on the resource indication information of the reference signal; and determining the mask information based on the configuration type of the reference signal.

In an optional implementation, the mask length information is a mask length; and the configuration type of the reference signal and the mask length information meet one or more of the following: when the configuration type is a first configuration type, the mask length is 2, 3, or 6; when the configuration type is a second configuration type, the mask length is 2 or 4; and when the configuration type is a third configuration type, the mask length is 2 or 3.

The configuration type of the reference signal is associated with a mapping mode of the reference signal on a frequency domain resource, and different configuration types correspond to different mapping modes of the reference signal on the frequency domain resource. The first configuration type is a configuration type 1 (configuration type 1). To be specific, the first configuration type means that the reference signal is mapped to one subcarrier at an interval of one subcarrier, or the first configuration type means that the reference signal is mapped to one subcarrier in every two subcarriers. The second configuration type is a configuration type 2 (configuration type 2). To be specific, the second configuration type means that the reference signal is mapped to two contiguous subcarriers at an interval of four subcarriers, or the second configuration type means that the reference signal is mapped to two contiguous subcarriers in every six subcarriers. The third configuration type means that the reference signal is mapped to one subcarrier at an interval of three subcarriers, or the third configuration type means that the reference signal is mapped to one subcarrier in every four subcarriers.

A name of the third configuration type is not limited in embodiments of this application. The third configuration type is a configuration type 3, or the third configuration type is an enhanced configuration type. For example, the third configuration type may also be referred to as a fourth configuration type or the like. Optionally, the configuration type of the reference signal may further include a mapping mode of the reference signal on a time domain resource.

It can be learned that the resource indication information of the reference signal may indicate different configuration types, and when the configuration types indicated by the resource indication information of the reference signal are different, values of mask lengths of the reference signal are also different. Therefore, the terminal device can determine the mask length based on the configuration type of the reference signal indicated by the resource indication information of the reference signal.

In another optional implementation, the mask length set information is a mask length set; and the configuration type of the reference signal and the mask length set information meet one or more of the following: when the configuration type is a first configuration type, the mask length set is a first set; when the configuration type is a second configuration type, the mask length set is a second set; and when the configuration type is a third configuration type, the mask length set is a third set.

It can be learned that the resource indication information of the reference signal may indicate different configuration types, and when the resource indication information of the reference signal indicates different configuration types, mask length sets are different. Therefore, the terminal device can determine the mask length set based on the configuration type of the reference signal indicated by the resource indication information of the reference signal.

In an optional implementation, the first set includes one or more of 2, 3, and 6; or the second set includes one or more of 2 and 4; or the third set includes one or more of 2 and 3. Therefore, the terminal device determines the mask length from the mask length set. For example, the terminal device determines the mask length from the mask length set based on a mask index indicated by a network device.

In an optional implementation, different configuration types of the reference signal correspond to different mask lengths; and/or a quantity of elements included in the first set is different from a quantity of elements included in the second set.

In another optional implementation, the first signaling indicates a fifth set, and the mask length set is the fifth set; and the fifth set is {2, 3, 4, 6, 8}; or the fifth set is {1, 2, 3, 4, 5, 6}; or the fifth set is {1, 2, 3, 4, 5, 6, 7, 8}. It can be learned that the terminal device can directly obtain, via fifth signaling, a set to which the mask length belongs, and then can determine the mask length from the fifth set.

In another optional implementation, the first signaling indicates the mask length, so that the terminal device can directly determine the mask length from the first signaling.

In an optional implementation, a mask length set of a reference signal for a first channel is a fourth set; a mask length set of a reference signal for a second channel is a sixth set; the first channel and the second channel are different channels; and the fourth set and the sixth set are different sets.

The first channel includes one or more of the following: a physical uplink shared channel, a physical uplink control channel, a physical downlink shared channel, a physical downlink control channel, and a physical broadcast channel. The second channel includes one or more of the following: a physical uplink shared channel, a physical uplink control channel, a physical downlink shared channel, a physical downlink control channel, and a physical broadcast channel.

In an optional implementation, the reference signal is a demodulation reference signal DMRS, and the mapping between the sequence of the reference signal and the first physical resource meets at least one of the following: when the configuration type is the first configuration type, $k = 2K \cdot n + 2k' + \triangle$; when the configuration type is the second configuration type, $k = (4 + K) \cdot n + k' + \triangle$; and when the configuration type is the third configuration type, $k = 4K \cdot n + 4k' + \triangle$.

$k$ is a frequency domain resource index in the first physical resource, $K$ is the mask length, $k' = 0,1,...,K$-1, $\triangle$ is a group number of a code-division multiplexing CDM group, and $n$ is an integer greater than or equal to 0.

It can be learned that when the configuration types of the reference signal are different, mapping relationships between the reference signal and a frequency domain resource in the first physical resource are different.

A port for the reference signal includes x ports, where x is an integer greater than or equal to 1; the x ports belong to X ports, where X is an integer greater than or equal to 8; and X is associated with the mask information.

It can be learned that the terminal device may further determine, based on the mask information, the X ports that may be used for transmission of the reference signal, and then determine, from the X ports, the x ports that are actually used for transmission of the reference signal.

In an optional implementation, the terminal device may further send first reporting information to a network device, where the first reporting information indicates mask information supported by the terminal device. It can be learned that the terminal device may further report, to the network device via the first reporting information, the mask information determined by the terminal device, to provide a reference for the network device when the network device determines the resource indication information of the reference signal.

According to a second aspect, an embodiment of this application further provides a signal transmission method, which may be applied to a terminal device. The method includes: obtaining resource allocation information, where a quantity of physical resource blocks allocated by using the resource allocation information is even; determining the allocated physical resource blocks based on the resource allocation information; and performing transmission of a reference signal on a part of subcarriers in the allocated physical resource blocks.

The performing transmission of the reference signal may refer to sending the reference signal, or receiving the reference signal. In other words, that the terminal device performs transmission of the reference signal may be that the terminal device sends an uplink reference signal or receives a downlink reference signal.

It can be learned that in embodiments of this application, the quantity of allocated physical resource blocks in the resource allocation information obtained by the terminal device is even, so that the terminal device performs transmission of the reference signal on a part of subcarriers in the physical resource blocks whose quantity is even. Therefore, a quantity of masks that are of the reference signal and that are scheduled by the terminal device is even, that is, it is ensured that the masks scheduled by the terminal device are orthogonal.

According to a third aspect, an embodiment of this application further provides a signal transmission method. The signal transmission method in this aspect corresponds to the signal transmission method in the first aspect, and the signal transmission method in this aspect is described from a network device side. The method includes: sending resource indication information of a reference signal; determining mask information, where the mask information is used to determine one or more of the following information: mask length information, mask length set information, and mask index information; and the resource indication information and the mask information are used to determine a first physical resource, or the resource indication information and the mask information are used to determine a mapping between a sequence of the reference signal and the first physical resource; and determining the first physical resource, and performing transmission of the reference signal on the first physical resource.

The performing transmission of the reference signal may refer to receiving the reference signal, or sending the reference signal. In other words, that the network device performs transmission of the reference signal may be that the network device receives an uplink reference signal or sends a downlink reference signal.

It can be learned that in embodiments of this application, the first physical resource for transmission of the reference signal is determined based on the resource indication information and the mask information related to a mask length, to help enable a total quantity of scheduled masks to be exactly divided by the mask length regardless of a quantity of resource blocks scheduled by the network device, that is, to help enable the scheduled masks to be orthogonal. This helps increase a quantity of orthogonal ports that can be supported while ensuring that the scheduled masks are orthogonal, so as to increase a quantity of terminal devices that can be scheduled.

In an optional implementation, the determining mask information includes: sending first signaling, and determining the mask information based on the first signaling; or determining the mask information according to a preset rule; or pre-specifying a value of at least one piece of information in the mask information. It can be learned that the terminal device can flexibly determine the mask information.

In an optional implementation, the first signaling includes a first configuration parameter, and the first configuration parameter indicates the mask information; and/or the first signaling does not include a first configuration parameter, and a value of the mask information is a default value.

In an optional implementation, that the network device determines the mask information according to the preset rule includes: determining a configuration type of the reference signal based on the resource indication information of the reference signal; and determining the mask information based on the configuration type of the reference signal.

In an optional implementation, the mask length information is a mask length; and the configuration type of the reference signal and the mask length information meet one or more of the following: when the configuration type is a first configuration type, the mask length is 2, 3, or 6; when the configuration type is a second configuration type, the mask length is 2 or 4; and when the configuration type is a third configuration type, the mask length is 2 or 3.

The configuration type of the reference signal is associated with a mapping mode of the reference signal on a frequency domain resource, and different configuration types correspond to different mapping modes of the reference signal on the frequency domain resource. The first configuration type is a configuration type 1 (configuration type 1). To be specific, the first configuration type means that the reference signal is mapped to one subcarrier at an interval of one subcarrier, or the first configuration type means that the reference signal is mapped to one subcarrier in every two subcarriers. The second configuration type is a configuration type 2 (configuration type 2). To be specific, the second configuration type means that the reference signal is mapped to two contiguous subcarriers at an interval of four subcarriers, or the second configuration type means that the reference signal is mapped to two contiguous subcarriers in every six subcarriers. The third configuration type means that the reference signal is mapped to one subcarrier at an interval of three subcarriers, or the third configuration type means that the reference signal is mapped to one subcarrier in every four subcarriers.

A name of the third configuration type is not limited in embodiments of this application. The third configuration type is a configuration type 3, or the third configuration type is an enhanced configuration type. For example, the third configuration type may also be referred to as a fourth configuration type or the like. Optionally, the configuration type of the reference signal may further include a mapping mode of the reference signal on a time domain resource.

It can be learned that the resource indication information of the reference signal may indicate different configuration types, and when the configuration types indicated by the resource indication information of the reference signal are different, values of mask lengths of the reference signal are also different. Therefore, the network device can determine the mask length based on the configuration type of the reference signal indicated by the resource indication information of the reference signal.

In another optional implementation, the mask length set information is a mask length set; and the configuration type of the reference signal and the mask length set information meet one or more of the following: when the configuration type is a first configuration type, the mask length set is a first set; when the configuration type is a second configuration type, the mask length set is a second set; and when the configuration type is a third configuration type, the mask length set is a third set.

It can be learned that the resource indication information of the reference signal may indicate different configuration types, and when the resource indication information of the reference signal indicates different configuration types, mask length sets are different. Therefore, the network device can determine the mask length set based on the configuration type of the reference signal indicated by the resource indication information of the reference signal.

In an optional implementation, the first set includes one or more of 2, 3, and 6; or the second set includes one or more of 2 and 4; or the third set includes one or more of 2 and 3. Therefore, the network device can determine the mask length based on the mask length set.

In an optional implementation, different configuration types of the reference signal correspond to different mask lengths; and/or a quantity of elements included in the first set is different from a quantity of elements included in the second set.

In another optional implementation, the first signaling indicates a fifth set, and the mask length set is the fifth set; and the fifth set is {2, 3, 4, 6, 8}; or the fifth set is {1, 2, 3, 4, 5, 6}; or the fifth set is {1, 2, 3, 4, 5, 6, 7, 8}. It can be learned that the network device can directly obtain, via fifth signaling, a set to which the mask length belongs, and then can determine the mask length from the fifth set.

In an optional implementation, a mask length set of a reference signal for a first channel is a fourth set; a mask length set of a reference signal for a second channel is a sixth set; the first channel and the second channel are different channels; and the fourth set and the sixth set are different sets.

The first channel includes one or more of the following: a physical uplink shared channel, a physical uplink control channel, a physical downlink shared channel, a physical downlink control channel, and a physical broadcast channel. The second channel includes one or more of the following: a physical uplink shared channel, a physical uplink control channel, a physical downlink shared channel, a physical downlink control channel, and a physical broadcast channel.

In an optional implementation, the mapping between the sequence of the reference signal and the first physical resource meets at least one of the following: when the configuration type is the first configuration type, $k = 2K \cdot n + 2k' + \triangle$; when the configuration type is the second configuration type, $k = (4 + K) \cdot n + k' + \triangle$; and when the configuration type is the third configuration type, $k = 4K \cdot n + 4k' + \triangle$.

$k$ is a frequency domain resource index in the first physical resource, $K$ is the mask length, $k' = 0, 1, ..., K-1$, $\triangle$ is a group number of a code-division multiplexing CDM group, and $n$ is an integer greater than or equal to 0.

It can be learned that when the configuration types of the reference signal are different, mapping relationships between the reference signal and a frequency domain resource in the first physical resource are different.

In an optional implementation, a port for the reference signal includes x ports, where x is an integer greater than or equal to 1; the x ports are included in X ports, where X is an integer greater than or equal to 8; and X is determined based on the mask information.

It can be learned that the network device may further determine, based on the mask information, the X ports that may be used for transmission of the reference signal, and then determine, from the X ports, the x ports that are actually used for transmission of the reference signal.

In an optional implementation, the network device may further receive first reporting information from a terminal device, where the first reporting information indicates mask information supported by the terminal device. In this manner, the network device can refer to the first reporting information when determining the resource indication information of the reference signal.

According to a fourth aspect, an embodiment of this application further provides a signal transmission method. The signal transmission method in this aspect corresponds to the signal transmission method in the second aspect, and the signal transmission method in this aspect is described from a network device side. The method includes: sending resource allocation information, where a quantity of physical resource blocks allocated by using the resource allocation information is even; determining the allocated physical resource blocks based on the resource allocation information; and performing transmission of a reference signal on a part of subcarriers in the allocated physical resource blocks.

The performing transmission of the reference signal may refer to receiving the reference signal, or sending the reference signal. In other words, that the network device performs transmission of the reference signal may be that the network device receives an uplink reference signal or sends a downlink reference signal.

It can be learned that in embodiments of this application, the quantity of allocated physical resource blocks in the resource allocation information sent by the network device is even, so that the network device performs transmission of the reference signal on a part of subcarriers in the physical resource blocks whose quantity is even. Therefore, a quantity of masks that are of the reference signal and that are scheduled by the network device is even, that is, it is ensured that the masks scheduled by the network device are orthogonal.

According to a fifth aspect, this application further provides a communication apparatus. The communication apparatus has some or all functions of implementing the terminal device in the first aspect, has some or all functions of implementing the terminal device in the second aspect, has some or all functions of implementing the network device in the third aspect, or has some or all functions of implementing the network device in the fourth aspect. For example, functions of the communication apparatus may have the functions of the terminal device according to some or all embodiments of the first aspect of this application, or may have a function of independently implementing any embodiment of this application. The function may be implemented by hardware, or may be implemented by hardware executing corresponding software. The hardware or the software includes one or more units or modules corresponding to the functions.

In a possible design, a structure of the communication apparatus may include a processing unit and a communication unit. The processing unit is configured to support the communication apparatus in performing a corresponding function in the foregoing method. The communication unit is configured to support communication between the communication apparatus and another communication apparatus. The communication apparatus may further include a storage unit. The storage unit is configured to be coupled to the processing unit and the communication unit, and stores program instructions and data that are necessary for the communication apparatus.

In an implementation, the communication apparatus includes: a processing unit and a communication unit. The communication unit is configured to receive and send data/signaling.

The communication unit is configured to receive resource indication information of a reference signal.

The processing unit is configured to determine mask information, where the mask information is used to determine one or more of the following information: mask length information, mask length set information, and mask index information; and

the resource indication information and the mask information are used to determine a first physical resource, or the resource indication information and the mask information are used to determine a mapping between a sequence of the reference signal and the first physical resource.

The processing unit is further configured to determine the first physical resource, and perform transmission of the reference signal on the first physical resource.

In addition, for another optional implementation of the communication apparatus in this aspect, refer to related content of the first aspect. Details are not described herein again.

In another implementation, the communication apparatus includes: a processing unit and a communication unit. The communication unit is configured to receive and send data/signaling.

The communication unit is configured to obtain resource allocation information, where a quantity of physical resource blocks allocated by using the resource allocation information is even.

The processing unit is configured to determine the allocated physical resource blocks based on the resource allocation information.

The communication unit is further configured to perform transmission of a reference signal on a part of subcarriers in the allocated physical resource blocks.

In addition, for another optional implementation of the communication apparatus in this aspect, refer to related content of the second aspect. Details are not described herein again.

In still another implementation, the communication apparatus includes: a processing unit and a communication unit. The communication unit is configured to receive and send data/signaling.

The communication unit is configured to send resource indication information of a reference signal.

The processing unit is configured to determine mask information, where the mask information is used to determine one or more of the following information: mask length information, mask length set information, and mask index information; and

the resource indication information and the mask information are used to determine a first physical resource, or the resource indication information and the mask information are used to determine a mapping between a sequence of the reference signal and the first physical resource.

The processing unit is further configured to determine the first physical resource, and perform transmission of the reference signal on the first physical resource.

In addition, for another optional implementation of the communication apparatus in this aspect, refer to related content of the third aspect. Details are not described herein again.

In still another implementation, the communication apparatus includes: a processing unit and a communication unit. The communication unit is configured to receive and send data/signaling.

The processing unit is configured to determine resource allocation information, where a quantity of physical resource blocks allocated by using the resource allocation information is even.

The processing unit is further configured to determine the allocated physical resource blocks based on the resource allocation information.

The communication unit is further configured to perform transmission of a reference signal on a part of subcarriers in the allocated physical resource blocks.

In addition, for another optional implementation of the communication apparatus in this aspect, refer to related content of the fourth aspect. Details are not described herein again.

In an example, the communication unit may be a transceiver or a communication interface, the storage unit may be a memory, and the processing unit may be a processor.

In an implementation, the communication apparatus includes: a processor and a transceiver. The transceiver is configured to receive and send data/signaling.

The transceiver is configured to receive resource indication information of a reference signal.

The processor is configured to determine mask information, where the mask information is used to determine one or more of the following information: mask length information, mask length set information, and mask index information; and

the resource indication information and the mask information are used to determine a first physical resource, or the resource indication information and the mask information are used to determine a mapping between a sequence of the reference signal and the first physical resource.

The processor is further configured to determine the first physical resource, and perform transmission of the reference signal on the first physical resource.

In addition, for another optional implementation of the communication apparatus in this aspect, refer to related content of the first aspect. Details are not described herein again.

In another implementation, the communication apparatus includes: a processor and a transceiver. The transceiver is configured to receive and send data/signaling.

The transceiver is configured to obtain resource allocation information, where a quantity of physical resource blocks allocated by using the resource allocation information is even.

The processor is configured to determine the allocated physical resource blocks based on the resource allocation information.

The processor is further configured to perform transmission of a reference signal on a part of subcarriers in the allocated physical resource blocks.

In addition, for another optional implementation of the communication apparatus in this aspect, refer to related content of the second aspect. Details are not described herein again.

In still another implementation, the communication apparatus includes: a processor and a transceiver. The transceiver is configured to receive and send data/signaling.

The transceiver is configured to send resource indication information of a reference signal.

The processor is configured to determine mask information, where the mask information is used to determine one or more of the following information: mask length information, mask length set information, and mask index information;

and

the resource indication information and the mask information are used to determine a first physical resource, or the resource indication information and the mask information are used to determine a mapping between a sequence of the reference signal and the first physical resource.

The processor is further configured to determine the first physical resource, and perform transmission of the reference signal on the first physical resource.

In addition, for another optional implementation of the communication apparatus in this aspect, refer to related content of the third aspect. Details are not described herein again.

In still another implementation, the communication apparatus includes: a processor and a transceiver. The transceiver is configured to receive and send data/signaling.

The processor is configured to send resource allocation information, where a quantity of physical resource blocks allocated by using the resource allocation information is even.

The processor is further configured to determine the allocated physical resource blocks based on the resource allocation information.

The processor is further configured to perform transmission of a reference signal on a part of subcarriers in the allocated physical resource blocks.

In addition, for another optional implementation of the communication apparatus in this aspect, refer to related content of the fourth aspect. Details are not described herein again.

In another implementation, the communication apparatus is a chip or a chip system. The processing unit may also be represented as a processing circuit or a logic circuit. The transceiver unit may be an input/output interface, an interface circuit, an output circuit, an input circuit, a pin, a related circuit, or the like on the chip or the chip system.

In an implementation process, the processor may be configured to perform, for example, but not limited to, baseband-related processing; and the transceiver may be configured to perform, for example, but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of an integrated circuit technology, increasingly more components may be integrated on a same chip. For example, the digital baseband processor and a plurality of application processors (for example, but not limited to, a graphics processing unit and a multimedia processor) may be integrated on a same chip. The chip may be referred to as a system-on-a-chip (system-on-a-chip, SoC). Whether the components are separately disposed on different chips or integrated and disposed on one or more chips usually depends on a requirement of a product design. Embodiments of this application impose no limitation on specific implementations of the foregoing components.

According to a sixth aspect, this application further provides a processor, configured to perform the foregoing methods. In a process of performing these methods, a process of sending the foregoing information and a process of receiving the foregoing information in the foregoing methods may be understood as a process of outputting the foregoing information by the processor and a process of receiving the foregoing input information by the processor. When outputting the information, the processor outputs the information to a transceiver, so that the transceiver transmits the information. After the information is outputted by the processor, other processing may further need to be performed on the information before the information arrives at the transceiver. Similarly, during receiving of the input information by the processor, the transceiver receives the information, and inputs the information to the processor. Further, after the transceiver receives the foregoing information, other processing may need to be performed on the information before the information is inputted into the processor.

Unless otherwise specified, operations such as sending and receiving related to the processor may be more generally understood as operations such as output, receiving, and input of the processor if the operations do not conflict with actual functions or internal logic of the operations in related descriptions, instead of operations such as sending and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read only memory (read only memory, ROM). The memory and the processor may be integrated on a same chip, or may be separately disposed on different chips. A type of the memory and a manner of disposing the memory and the processor are not limited in embodiments of this application.

According to a seventh aspect, this application further provides a communication system. The system includes one or more network devices and one or more terminal devices. In another possible design, the system may further include another device that interacts with the network device and the terminal device.

According to an eighth aspect, this application provides a computer-readable storage medium, configured to store instructions. When the instructions are run by a computer, the method according to any one of the first aspect to the fourth aspect is implemented.

According to a ninth aspect, this application further provides a computer program product including instructions. When the computer program product runs on a computer, the method according to any one of the first aspect to the fourth aspect is implemented.

According to a tenth aspect, this application provides a chip system. The chip system includes a processor and an interface. The interface is configured to obtain a program or instructions. The processor is configured to invoke the program or the instructions to implement or support a terminal device in implementing the function in the first aspect or the second aspect, or support a network device in implementing the function in the third aspect or the fourth aspect, for example, determining or processing at least one of data and information in the foregoing method. In a possible design, the chip system further includes a memory. The memory is configured to store program instructions and data that are necessary for a terminal. The chip system may include a chip, or may include a chip and another discrete component.

**BRIEF DESCRIPTION OF DRAWINGS**

FIG. 1 is a diagram of a system structure of a communication system according to an embodiment of this application;

FIG. 2 is a diagram of an application scenario according to an embodiment of this application;

FIG. 3(a) is a diagram of a single-symbol DMRS of a first configuration type according to an embodiment of this application;

FIG. 3(b) is a diagram of a double-symbol DMRS of a first configuration type according to an embodiment of this application;

FIG. 4(a) is a diagram of a single-symbol DMRS of a second configuration type according to an embodiment of this application;

FIG. 4(b) is a diagram of a double-symbol DMRS of a second configuration type according to an embodiment of this application;

FIG. 5 is a diagram of a plane of a single-symbol DMRS of a third configuration type according to an embodiment of this application;

FIG. 6 is a diagram of an OCC of a single-symbol DMRS of a second configuration type according to an embodiment of this application;

FIG. 7 is a schematic flowchart of a signal transmission method according to an embodiment of this application;

FIG. 8 is a schematic flowchart of another signal transmission method according to an embodiment of this application;

FIG. 9 is a schematic flowchart of still another signal transmission method according to an embodiment of this application;

FIG. 10 is a schematic flowchart of still another signal transmission method according to an embodiment of this application;

FIG. 11 is a diagram of a structure of a communication apparatus according to an embodiment of this application;

FIG. 12 is a diagram of a structure of another communication apparatus according to an embodiment of this application; and

FIG. 13 is a diagram of a structure of a chip according to an embodiment of this application.

**DESCRIPTION OF EMBODIMENTS**

The following clearly and completely describes the technical solutions in embodiments of this application with reference to the accompanying drawings in embodiments of this application.

I. Communication system

To better understand a signal transmission method disclosed in embodiments of this application, a communication system to which embodiments of this application are applicable is described.

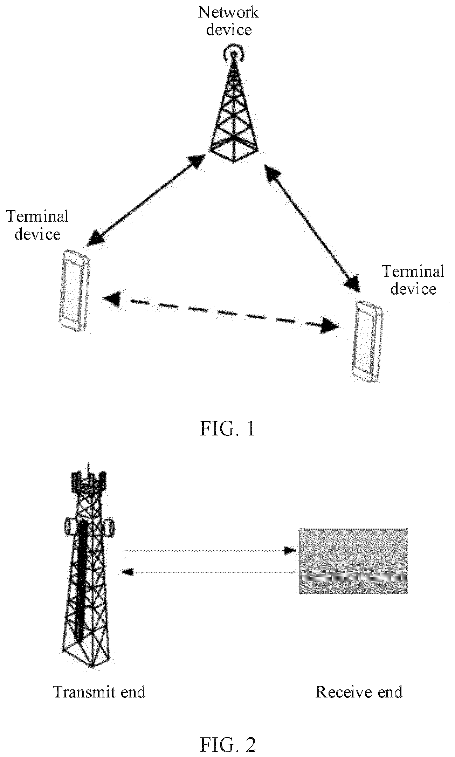

Embodiments of this application may be applied to a fifth generation mobile communication (5th generation mobile communication, 5G) system, a satellite communication system, a short-range wireless communication system, and the like. A system architecture is shown in FIG. 1. The wireless communication system may include one or more network devices and one or more terminal devices. The wireless communication system may alternatively perform point-to-point communication, for example, a plurality of terminal devices communicate with each other.

It may be understood that the wireless communication system mentioned in embodiments of this application includes but is not limited to three application scenarios of a narrowband-internet of things (narrow band-internet of things, NB-IoT) system, a long term evolution (long term evolution, LTE) system, and a 5G mobile communication system:

enhanced mobile broadband (enhanced mobile broadband, eMBB), ultra-reliable and low-latency communications (ultra-reliable and low-latency communications, URLLC), and massive machine type communication (massive machine type communication, mMTC), a wireless fidelity (wireless fidelity, Wi-Fi) system, a mobile communication system after 5G, or the like.

In embodiments of this application, the network device is a device having a wireless transceiver function, and is configured to communicate with the terminal device. The network device may be an evolved NodeB (evolved NodeB, eNB or eNodeB) in LTE, a base station in a 5G network or a base station in a future evolved public land mobile network (public land mobile network, PLMN), a broadband network gateway (broadband network gateway, BNG), an aggregation switch, a non-third generation partnership project (3rd generation partnership project, 3GPP) access device, or the like. Optionally, the network device in embodiments of this application may include various forms of base stations, for example, a macro base station, a micro base station (also referred to as a small cell), a relay station, an access point, a device for implementing a base station function in the future, an access node in a Wi-Fi system, a transmission reception point (transmitting and receiving point, TRP), a transmitting point (transmitting point, TP), a mobile switching center, and a device that functions as a base station in device-to-device (device-to-device, D2D) communication, vehicle-to-everything (vehicle-to-everything, V2X) communication, and machine-to-machine (machine-to-machine, M2M) communication. This is not specifically limited in embodiments of this application.

The network device may communicate and interact with a core network device, to provide a communication service for the terminal device. The core network device is, for example, a device in a 5G core network (core network, CN). As a bearer network, the core network provides an interface to a data network, provides communication connection, authentication, management, and policy control for a terminal, and bearers a data service.

The terminal device in embodiments of this application may include various handheld devices, vehicle-mounted devices, wearable devices, or computing devices that have a wireless communication function, or other processing devices connected to a wireless modem. The terminal device may also be referred to as a terminal. The terminal device may alternatively be user equipment (user equipment, UE), an access terminal, a subscriber unit (subscriber unit), a user agent, a cellular phone (cellular phone), a smartphone (smartphone), a wireless data card, a personal digital assistant (personal digital assistant, PDA) computer, a tablet computer, a wireless modem (modem), a handheld device (handset), a laptop computer (laptop computer), a machine type communication (machine type communication, MTC) terminal, a communication device carried on a high-altitude aircraft, a wearable device, an uncrewed aerial vehicle, a robot, a terminal in device-to-device (device-to-device, D2D) communication, a terminal in a vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application.

An application scenario of embodiments of this application may be shown in FIG. 2. The communication scenario includes a transmit end and a receive end. Transmission between the transmit end and the receive end may be performed via a radio wave, or may be performed via a transmission medium such as visible light, a laser, infrared, or an optical fiber. In the communication scenario, the transmit end may be a terminal device, and the receive end is a network device. Optionally, the transmit end is a network device, and the receive end is a terminal device.

In embodiments disclosed in this application, all aspects, embodiments, or features of this application are presented by describing a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

II. Related concepts

To better understand the signal transmission method disclosed in embodiments of this application, related concepts in embodiments of this application are briefly described.

1. Multiplexing technology, frequency-division multiplexing, time-division multiplexing, and code-division multiplexing

The multiplexing technology means that the transmit end combines a plurality of signals and performs transmission of a combined signal on a dedicated physical channel, and the receive end separates the combined signal. Transmission of the signal is implemented through the multiplexing technology, so that channel transmission efficiency can be effectively improved.

Frequency-division multiplexing (frequency-division multiplexing, FDM): A carrier bandwidth is divided into sub-channels of different frequency bands, and users can simultaneously perform transmission of respective signals on different sub-channels. In other words, all the users using the frequency-division multiplexing occupy different bandwidth resources at the same time.

Time-division multiplexing (time-division multiplexing, TDM): Different channels are obtained through division based on time, and users occupy a same frequency bandwidth at different time. In other words, all the users using the time-division multiplexing occupy different time resources within the same frequency bandwidth.

Code-division multiplexing (code-division multiplexing, CDM): Users use a same bandwidth for communication at the same time, but use different code types. Codes used by different users are referred to as orthogonal codes. For example, if the orthogonal code is an orthogonal cover code (orthogonal cover code, OCC), each user implements code-division multiplexing using the OCC.

2. Mask

The mask is used by the receive end to perform multiple-input multiple-output (multiple-input multiple-output, MIMO) decoding and related demodulation, and the transmit end needs to perform transmission of a pilot sequence used for channel estimation, that is, a DMRS. A design of the DMRS needs to meet that DMRSs corresponding to transmission layers are orthogonal to each other, that is, it is ensured that there is no interference between equivalent channels obtained by precoding channels of transmit antennas.

For example, the mask may be an OCC code, or may be a cyclic shift (cyclic shift, CS) code.

The mask may be a frequency domain mask or a time domain mask. The solution of the present invention uses the frequency domain mask as an example, and is also applicable to the time domain mask. Optionally, the mask is equivalent to a mask sequence.

It should be uniformly noted that a plurality of reference signals may be obtained by multiplying a reference signal sequence by a plurality of mask sequences, and when transmission of the plurality of reference signals is performed on a same time-frequency resource, the plurality of reference signals are orthogonal to each other. Alternatively, a plurality of to-be-communicated reference signal sequences may be obtained by multiplying reference signal sequences by mask sequences, and the plurality of communicated reference signal sequences are orthogonal to each other on a same time-frequency resource.

3. Single-symbol demodulation reference signal (demodulation reference signal, DMRS), double-symbol DMRS, first configuration type, second configuration type, and third configuration type

In embodiments of this application, a configuration type of a reference signal may be a type of the reference signal or a type of a configuration of the reference signal. For example, the configuration type of the reference signal is a configuration type 1, a configuration type 2, or a configuration type 3. For another example, the configuration type of the reference signal is that the configuration of the reference signal is a type 1, or the configuration type of the reference signal is that the configuration of the reference signal is a type 2. The configuration of the reference signal may be a time domain resource and/or a frequency domain resource of the reference signal, a mask length of the reference signal, a mapping mode of the reference signal, data associated with the reference signal, or the like.

The single-symbol DMRS is a DMRS mapped to one orthogonal frequency division multiplexing (orthogonal frequency division multiplexing, OFDM) symbol on a time domain resource.

The double-symbol DMRS is a DMRS mapped to two OFDM symbols on the time domain resource.

In embodiments of this application, the configuration type of the reference signal is associated with a mapping mode of the reference signal on a frequency domain resource, and different configuration types correspond to different mapping modes of the reference signal on the frequency domain resource. For example, the first configuration type is a configuration type 1 (configuration type 1). To be specific, the first configuration type means that the reference signal is mapped to one subcarrier at an interval of one subcarrier, or the first configuration type means that the reference signal is mapped to one subcarrier in every two subcarriers. For another example, the second configuration type is a configuration type 2 (configuration type 2). To be specific, the second configuration type means that the reference signal is mapped to two contiguous subcarriers at an interval of four subcarriers, or the second configuration type means that the reference signal is mapped to two contiguous subcarriers in every six subcarriers. For still another example, the third configuration type means that the reference signal is mapped to one subcarrier at an interval of three subcarriers, or the third configuration type means that the reference signal is mapped to one subcarrier in every four subcarriers. A name of the third configuration type is not limited in embodiments of this application. The third configuration type is a configuration type 3, or the third configuration type is an enhanced configuration type. For example, the third configuration type may also be referred to as a fourth configuration type or the like. Optionally, the configuration type of the reference signal may further include a mapping mode of the reference signal on a time domain resource.

With reference to the first configuration type, the second configuration type, and the third configuration type, the following separately describes a DMRS of the first configuration type, a DMRS of the second configuration type, and a DMRS of the third configuration type.

The DMRS of the first configuration type, the DMRS of the second configuration type, and the DMRS of the third configuration type may be all classified into a single-symbol DMRS and a double-symbol DMRS.

3.1 Comb

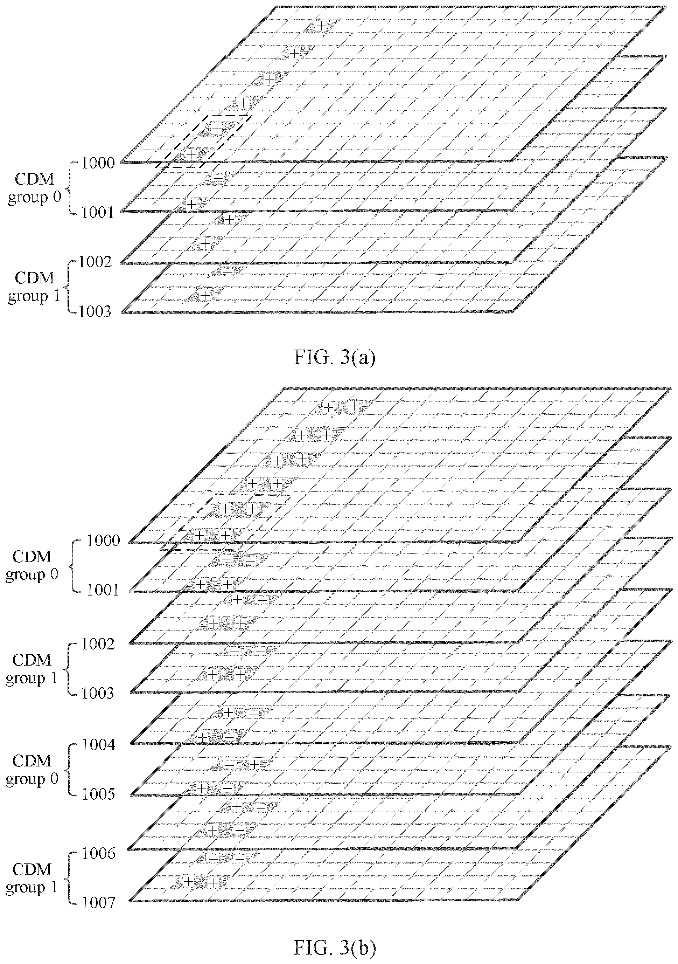

The comb represents a comb-shaped interleaving configuration used for reference signal or data transmission between subcarriers in frequency domain. A value L of the comb represents that a sequence value of one reference signal is mapped to one subcarrier in every L subcarriers, or a sequence value of a reference signal is mapped to one subcarrier at an interval of L-1 subcarriers. The reference signal herein represents a same reference signal. For example, as shown in FIG. 3(a), a comb 2 represents that a sequence value of one reference signal is mapped to one subcarrier in every two subcarriers. For another example, as shown in FIG. 3(b), a comb 4 represents that a sequence value of one reference signal is mapped to one subcarrier in every four subcarriers.

3.2 DMRS of a first configuration type

FIG. 3(a) is a diagram of a single-symbol DMRS of a first configuration type. As shown in FIG. 3(a), it is determined, based on a mapping mode of the DMRS on a frequency domain resource, that two orthogonal DMRS ports can be multiplexed on the frequency domain resource through FDM. Therefore, the single-symbol DMRS of the first configuration type includes two CDM groups. DMRSs mapped to a same time resource and/or frequency resource belong to a same CDM group. To be specific, in FIG. 3(a), a port 1000 and a port 1001 belong to a CDM group 0, and a port 1002 and a port 1003 belong to a CDM group 1. The ports in the CDM group 0 and the ports in the CDM group 1 are orthogonal to each other through FDM. For example, the port 1000 and the port 1002 are orthogonal through FDM. For another example, the port 1000 and the port 1003 are orthogonal through FDM.

Different ports in the same CDM group may be orthogonal to each other through code-division multiplexing. In code domain, currently, protocol Release 15, protocol Release 16, and protocol Release 17 (Release-15, Release-16, and Release-17) support an OCC whose length is 2. Therefore, two orthogonal DMRS ports can be multiplexed through code-division multiplexing, that is, one CDM group includes two DMRS ports. In other words, the port 1000 and the port 1001 in the CDM group 0 are orthogonal to each other through code-division multiplexing, and the port 1002 and the port 1003 in the CDM group 1 are orthogonal to each other through code-division multiplexing.

For example, orthogonal codes of the port 1000 mapped to corresponding subcarriers in one resource block (resource block, RB) are {+1, +1, +1, +1, +1, +1} in sequence, and orthogonal codes of the port 1001 mapped to corresponding subcarriers in one RB are {+1, -1, +1, -1, +1, -1} in sequence. It can be learned that the port 1000 and the port 1001 in the CDM group 0 are orthogonal in code domain, that is, a DMRS sequence corresponding to the port 1000 and a DMRS sequence corresponding to the port 1001 in the CDM group 0 are orthogonal.

FIG. 3(b) is a diagram of a double-symbol DMRS of a first configuration type. It can be learned that the double-symbol DMRS of the first configuration type is mapped to two OFDM symbols. Compared with the single-symbol DMRS of the first configuration type, the double-symbol DMRS of the first configuration type not only implements both multiplexing of two orthogonal DMRS ports through FDM and multiplexing of two orthogonal DMRS ports through code-division multiplexing, but also may implement multiplexing of two orthogonal DMRS ports through time-division multiplexing-code-division multiplexing, for example, implement multiplexing of two orthogonal DMRS ports through TDD-OCC.

For example, in FIG. 3(b), orthogonal codes of each of a port 1000, a port 1001, a port 1004, and a port 1005 in a CDM group 0 that are mapped to corresponding subcarriers in one RB on a 1st OFDM symbol and a 2nd OFDM symbol are shown in Table 1.

**Table 1**

|  | 1000 |  | 1001 |  | 1004 |  | 1005 |  |
|---|---|---|---|---|---|---|---|---|
|  | Symbol 1 | Symbol 2 | Symbol 1 | Symbol 2 | Symbol 1 | Symbol 2 | Symbol 1 | Symbol 2 |
| Subcarrier 0 | +1 | +1 | +1 | +1 | +1 | -1 | +1 | -1 |
| Subcarrier 2 | +1 | +1 | -1 | -1 | +1 | -1 | -1 | +1 |
| Subcarrier 4 | +1 | +1 | +1 | +1 | +1 | -1 | +1 | -1 |
| Subcarrier 6 | +1 | +1 | -1 | -1 | +1 | -1 | -1 | +1 |
| Subcarrier 8 | +1 | +1 | +1 | +1 | +1 | -1 | +1 | -1 |
| Subcarrier 10 | +1 | +1 | -1 | -1 | +1 | -1 | -1 | +1 |

In Table 1, the symbol 1 represents the 1st OFDM symbol to which the double-symbol DMRS is mapped, and the symbol 2 represents the 2nd OFDM symbol to which the double-symbol DMRS is mapped. The subcarrier 0 represents a subcarrier whose frequency domain index is 0. Similarly, the subcarrier 10 represents a subcarrier whose frequency domain index is 10. The frequency domain index may be a relative index or an absolute index. For example, the frequency domain index is determined based on a frequency domain reference point. The frequency domain reference point is a subcarrier 0 of a lowest-numbered resource block in a core resource set (Core Resource Set, CORESET 0), or the frequency domain reference point is a subcarrier 0 of a common resource block 0. For another example, the subcarrier whose frequency domain index is 0 is a 1st subcarrier in one RB.

It can be learned from Table 1 that the port 1000, the port 1001, the port 1004, and the port 1005 correspond to a same time domain resource and frequency domain resource. The port 1000 and the port 1001 are orthogonal through frequency-division-code-division multiplexing, and the port 1004 and the port 1005 are orthogonal through frequency-division-code-division multiplexing. An orthogonal code on the symbol 1 of the port 1000 is the same as an orthogonal code on the symbol 1 of the port 1004, and an orthogonal code on the symbol 2 of the port 1000 is opposite to an orthogonal code on the symbol 2 of the port 1004. In other words, the port 1000 and the port 1004 are orthogonal through time-division-code-division multiplexing. In other words, the port 1000 and the port 1004 are orthogonal through time division orthogonal codes on the symbol 1 and the symbol 2. Similarly, the port 1001 and the port 1005 are orthogonal through time division orthogonal codes on the symbol 1 and the symbol 2.

With reference to the foregoing descriptions, the single-symbol DMRS of the first configuration type can support multiplexing of four orthogonal ports, and the double-symbol DMRS of the first configuration type can support multiplexing of eight orthogonal ports.

3.3 DMRS of a second configuration type

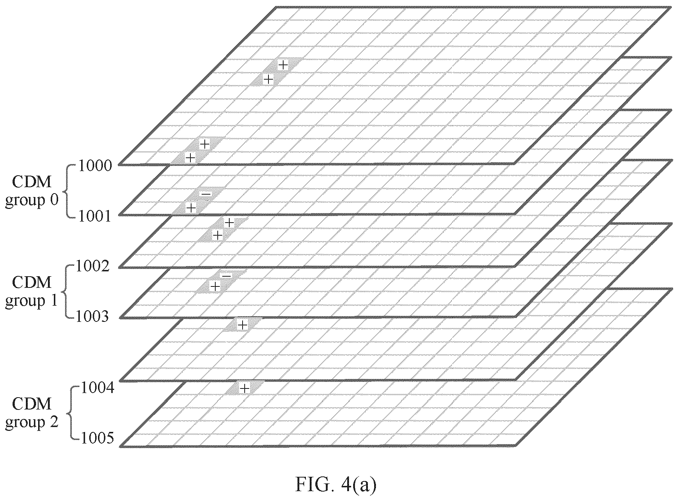

FIG. 4(a) is a diagram of a single-symbol DMRS of a second configuration type. As shown in FIG. 4(a), it is determined, based on a mapping mode of the DMRS on a frequency domain resource, that three orthogonal DMRS ports can be multiplexed on the frequency domain resource through FDM. Therefore, the single-symbol DMRS of the second configuration type includes three CDM groups, that is, a CDM group 0, a CDM group 1, and a CDM group 2. In code domain, Release-15, Release-16, and Release-17 support an orthogonal code whose length is 2. Therefore, two orthogonal DMRS ports can be multiplexed through code-division multiplexing. Therefore, one CDM group includes two orthogonal DMRS ports. In other words, the CDM group 0 includes a port 1000 and a port 1001, the CDM group 1 includes a port 1002 and a port 1003, and the CDM group 2 includes a port 10004 and a port 1005.

Similar to the single-symbol DMRS of the first configuration type, orthogonal DMRS ports are multiplexed between different CDM groups through frequency-division multiplexing. Different DMRS ports in the same CDM group are orthogonal to each other through code-division multiplexing. For example, orthogonal codes of the port 1000 in the CDM group 0 mapped to subcarriers in one RB are {+1, +1, +1, +1} in sequence, and orthogonal codes of the port 1001 mapped to subcarriers in one RB are {+1, -1, +1, -1} in sequence. It can be learned that the port 1000 and the port 1001 in the CDM group 0 are orthogonal in code domain, that is, a DMRS sequence corresponding to the port 1000 and a DMRS sequence corresponding to the port 1001 in the CDM group 0 are orthogonal.

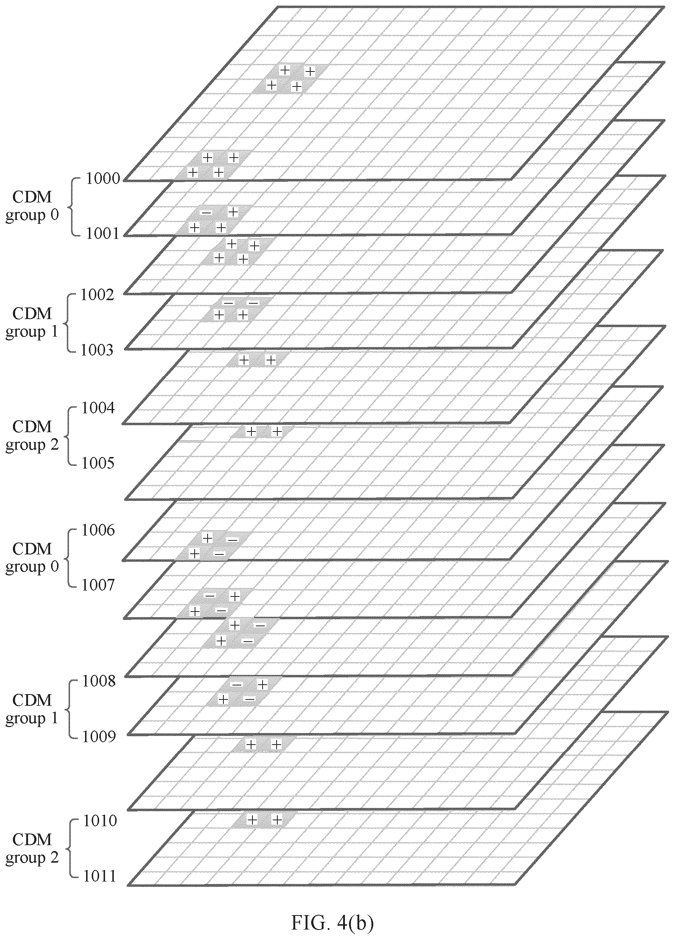

FIG. 4(b) is a diagram of a double-symbol DMRS of a second configuration type. Compared with the single-symbol DMRS of the second configuration type, the double-symbol DMRS of the second configuration type not only may implement both multiplexing of two orthogonal DMRS ports through FDM and multiplexing of two orthogonal DMRS ports through code-division multiplexing, but also may implement multiplexing of two orthogonal DMRS ports through time-division multiplexing-code-division multiplexing, for example, implement multiplexing of two orthogonal DMRS ports through TDD-OCC.

For example, orthogonal codes of each of a port 1000, a port 1001, a port 1006, and a port 1007 in the same CDM group 0 that are mapped to subcarriers in one RB on a 1st OFDM symbol and a 2nd OFDM symbol are shown in Table 2.

**Table 2**

| | 1000 | | 10001 | | 1006 | | 1007 | |
|---|---|---|---|---|---|---|---|---|
| | Symbol 1 | Symbol 2 | Symbol 1 | Symbol 2 | Symbol 1 | Symbol 2 | Symbol 1 | Symbol 2 |
| Subcarrier 0 | +1 | +1 | +1 | +1 | +1 | -1 | +1 | -1 |
| Subcarrier 1 | +1 | +1 | -1 | -1 | +1 | -1 | -1 | +1 |
| Subcarrier 6 | +1 | +1 | +1 | +1 | +1 | -1 | +1 | -1 |
| Subcarrier 7 | +1 | +1 | -1 | -1 | +1 | -1 | -1 | +1 |

In Table 2, the symbol 1 represents the 1st OFDM symbol to which the double-symbol DMRS is mapped, and the symbol 2 represents the 2nd OFDM symbol to which the double-symbol DMRS is mapped. The subcarrier 0 represents a subcarrier whose frequency domain index is 0. Similarly, the subcarrier 7 represents a subcarrier whose frequency domain index is 7. The frequency domain index is determined based on a frequency domain reference point. For details, refer to the foregoing descriptions. Details are not described again.

It can be learned from Table 2 that the port 1000, the port 1001, the port 1006, and the port 1007 are on the symbol 1. The port 1000 and the port 1001 are orthogonal through code-division multiplexing, and the port 1006 and the port 1007 are orthogonal through code-division multiplexing. An orthogonal code on the symbol 1 of the port 1000 is the same as an orthogonal code on the symbol 1 of the port 1006, and the port 1000 and the port 1006 are orthogonal through time-division multiplexing-code-division multiplexing. In other words, the port 1000 and the port 1006 are orthogonal through time-domain orthogonal codes on the symbol 1 and the symbol 2. Similarly, the port 1001 and the port 1007 are orthogonal through time-domain orthogonal codes on the symbol 1 and the symbol 2.

With reference to the foregoing descriptions, the single-symbol DMRS of the second configuration type can support multiplexing of six orthogonal ports, and the double-symbol DMRS of the second configuration type can support multiplexing of 12 orthogonal ports.

3.4 DMRS of a third configuration type

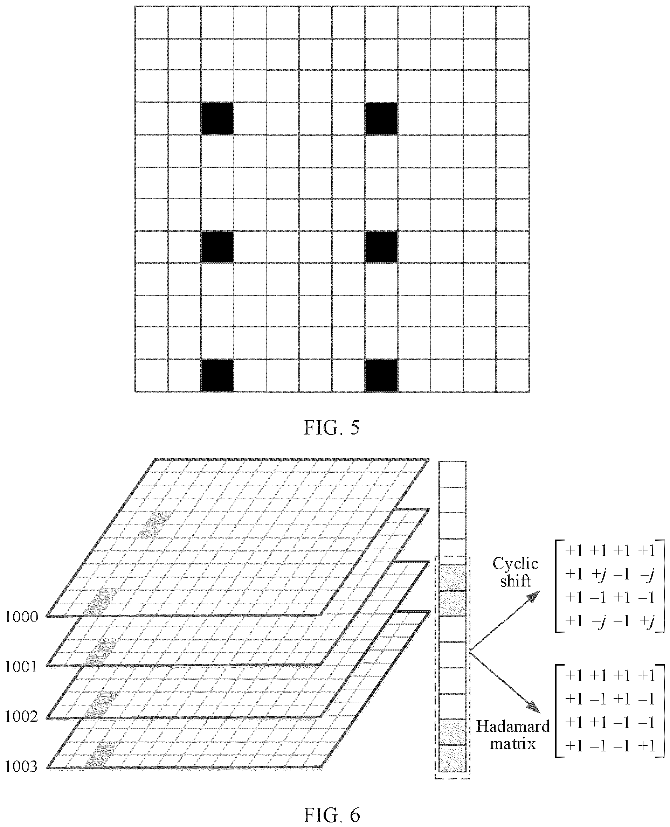

FIG. 5 is a plane diagram of a single-symbol DMRS of a third configuration type. It can be learned from FIG. 5 that four groups of DMRSs may be distinguished on a frequency domain resource, so that there are four CDM groups in the single-symbol DMRS of the third configuration type. When a code length of an orthogonal code is 2, the single-symbol DMRS of the third configuration type can support multiplexing of eight orthogonal DMRS ports, and a double-symbol DMRS of the third configuration type can support multiplexing of 16 orthogonal DMRS ports.

In embodiments of this application, the "first configuration type", the "second configuration type", and the "third configuration type" represent different mapping modes between a reference signal and a frequency domain resource. The "first configuration type", the "second configuration type", and the "third configuration type" do not limit configuration type parameters indicated by higher layer signaling. For example, the "first configuration type" and the "third configuration type" are configuration types indicated by same higher layer signaling, or the "first configuration type" and the "third configuration type" are configuration types indicated by different higher layer signaling. For another example, the "first configuration type" and the "third configuration type" are same configuration types, or the "first configuration type" and the "third configuration type" are different configuration types.

When the network device indicates, via the higher layer signaling, that the "first configuration type" and the "third configuration type" are the same configuration types, the configuration type may also be referred to as a "first configuration type". In this case, the "first configuration type" is not limited to the "first configuration type" in 3.1. When the network device indicates, via the higher layer signaling, that a comb of the "first configuration type" is 2, the "first configuration type" is the same as the "first configuration type" in 3.1, that is, the "first configuration type" means that on a domain resource, a sequence of a reference signal is mapped to one subcarrier at an interval of one subcarrier (or the sequence of the reference signal is mapped to one subcarrier in every two subcarriers). When the network device indicates, via the higher layer signaling, that a comb of the "first configuration type" is 4, the "first configuration type" is the same as the "third configuration type" in 3.3, that is, the "first configuration type" means that on a domain resource, a sequence of a reference signal is mapped to one subcarrier at an interval of three subcarriers (or the sequence of the reference signal is mapped to one subcarrier in every four subcarriers).

In other words, when the network device indicates, via the higher layer signaling, that the "first configuration type" and the "third configuration type" are the same configuration types, the "first configuration type" represents that the reference signal is mapped to one subcarrier each time the reference signal is mapped, and a specific mapping mode of the reference signal on the frequency domain resource may be determined based on a comb value indicated by the higher layer signaling. Optionally, a specific mapping mode, represented by the "first configuration type", on the frequency domain resource may alternatively be determined based on a default comb value. For example, if the network device does not indicate a comb value to the terminal device via the higher layer signaling, the terminal device considers that the comb is 4 by default, and determines that the "first configuration type" is the "third configuration type" in 3.3.

4. Mapping relationship between a DMRS and a physical resource

It is assumed that $r(m)$ is a DMRS sequence, and the mapping relationship between the DMRS and the physical resource, that is, between the DMRS and a $(k,l)_{p,u}{}^{\text{th}}$ resource element (resource element, RE) may be represented as:

$$a_{k,l}^{(p,u)} = \beta_{PDSCH}^{DMRS} w_f(k')w_t(l')r(2n+k')$$

$$k = \begin{cases} 4n+2k'+\Delta & \text{first configuration type} \\ 6n+k'+\Delta & \text{second configuration type} \end{cases} \quad (1)$$

$\beta_{PDSCH}^{DMRS}$ is a transmission power scaling factor, $k$ represents a frequency domain resource index on the physical resource, $l$ represents a time domain resource index, $k' = 0,1$, $l = \bar{l} + l'$, $\bar{l}$ represents a time domain reference index, $\Delta$ represents different CDM groups, $w_f(k')$ represents an FD-OCC, and $w_t(l')$ represents a TD-OCC.

In embodiments of this application, if a physical uplink control channel (physical downlink control channel, PDCCH) corresponding to a PDSCH is associated with a CORESET 0 and common search space of a Type0-PDCCH, and is a system information radio network temporary identifier (system Information radio network temporary identifier, SI-RNTI), a reference point of $k$ is a subcarrier 0 of a lowest-numbered resource block in the CORESET 0; otherwise, a reference point of $k$ is a subcarrier 0 of a CRB 0. Therefore, the physical resource for transmission of the DMRS is determined based on a location of a CRB that is for transmission of the PDSCH and that is configured by the network device.

For the DMRS of the first configuration type and the DMRS of the second configuration type, values of parameters in Formula (1) are respectively determined according to the following Table 3 and Table 4.

**Table 3 Mapping parameter of a DMRS of a first configuration type**

| $p$ | CDM group | $\Delta$ | $w_f(k')$ | | $w_t(l')$ | |
|---|---|---|---|---|---|---|
| | | | $k'=0$ | $k'=1$ | $l'=0$ | $l'=1$ |
| 1000 | 0 | 0 | +1 | +1 | +1 | +1 |
| 1001 | 0 | 0 | +1 | -1 | +1 | +1 |
| 1002 | 1 | 1 | +1 | +1 | +1 | +1 |
| 1003 | 1 | 1 | +1 | -1 | +1 | +1 |
| 1004 | 0 | 0 | +1 | +1 | +1 | -1 |
| 1005 | 0 | 0 | +1 | -1 | +1 | -1 |
| 1006 | 1 | 1 | +1 | +1 | +1 | -1 |
| 1007 | 1 | 1 | +1 | -1 | +1 | -1 |

**Table 4 Mapping parameter of a DMRS of a second configuration type**

| $p$ | CDM group | $\Delta$ | $w_f(k')$ | | $w_t(l')$ | |
|---|---|---|---|---|---|---|
| | | | $k'=0$ | $k'=1$ | $l'=0$ | $l'=1$ |
| 1000 | 0 | 0 | +1 | +1 | +1 | +1 |
| 1001 | 0 | 0 | +1 | -1 | +1 | +1 |
| 1002 | 1 | 2 | +1 | +1 | +1 | +1 |
| 1003 | 1 | 2 | +1 | -1 | +1 | +1 |
| 1004 | 2 | 4 | +1 | +1 | +1 | +1 |
| 1005 | 2 | 4 | +1 | -1 | +1 | +1 |
| 1006 | 0 | 0 | +1 | +1 | +1 | -1 |
| 1007 | 0 | 0 | +1 | -1 | +1 | -1 |
| 1008 | 1 | 2 | +1 | +1 | +1 | -1 |
| 1009 | 1 | 2 | +1 | -1 | +1 | -1 |
| 1010 | 2 | 4 | +1 | +1 | +1 | -1 |

$$a_{k,l}^{(p,u)} = \beta_{PDSCH}^{DMRS} w_f(k')w_t(l')r(2n+k')$$

(continued)

| $p$ | CDM group | $\Delta$ | $w_f(k')$ | | $w_t(l')$ | |
|------|-----------|----------|-----------|------|-----------|------|
| | | | $k'=0$ | $k'=1$ | $l'=0$ | $l'=1$ |
| 1011 | 2 | 4 | +1 | -1 | +1 | -1 |
| $p$ represents a port of a reference signal, or $p$ represents an antenna port. | | | | | | |

It can be learned that a DMRS sequence may be mapped to one or more physical resources based on the mapping parameters in Table 3 and Table 4, and a DMRS is sent on a corresponding physical resource through one or more ports.

In embodiments of this application, a subcarrier to which the DMRS is mapped is in a common resource block (common resource block, CRB) allocated or scheduled for information transmission. In other words, the subcarrier to which the DMRS sequence is mapped is a subcarrier in a CRB that is allocated by the network device and that is used for information transmission.

In embodiments of this application, the physical resource is a time domain resource and/or a frequency domain resource. "Information" refers to an uplink signal, uplink data, a downlink signal, or downlink data. For example, the information is a physical downlink shared channel (physical downlink shared channel, PDSCH), or the information is information carried on the PDSCH. For another example, the information is a physical uplink shared channel (physical uplink shared channel, PUSCH), or the information is information carried on the PUSCH. For still another example, the information is a physical downlink control channel (physical downlink control channel, PDCCH) or a physical uplink control channel (physical uplink control channel, PUCCH), the information is information carried on the PDCCH, or the information is information carried on the PUCCH. For still another example, the information is a physical broadcast channel (broadcast channel, PBCH), or information carried on the PBCH. For still another example, the "information" is a sounding reference signal (sounding reference signal, SRS), a channel state information-reference signal (channel state information-reference signal, CSI-RS), a DMRS, a positioning reference signal (positioning reference signal, PRS), or a phase-tracking reference signal (phase-tracking reference signal, PTRS).

In embodiments of this application, a "scheduled resource block" is a resource block allocated for information transmission, is a resource block assumed by the terminal device and assumed as a precoding granularity in frequency domain, is physical resource block bundling, or the like.

In a possible implementation, when the precoding granularity is a wideband (wideband), or when the precoding granularity is configured as the wideband, a quantity of scheduled resource blocks is even.

To increase a quantity of terminal devices scheduled by the network device at the same time, a quantity of orthogonal DMRS ports that can be supported in a specific time-frequency resource needs to be increased. Currently, the quantity of orthogonal DMRS ports may be increased in the mapping mode of the third configuration type, or a code length of a DMRS is extended from 2 to 4, to increase the quantity of orthogonal DMRS ports. For example, when a code length of an OCC of the single-symbol DMRS of the second configuration type is 4, a form of an orthogonal code of the single-symbol DMRS of the second configuration type may be shown in FIG. 6. The orthogonal code may be represented in a cyclic shift manner, or may be represented by using a Hadamard matrix. With reference to the foregoing descriptions, it can be learned that the code length of the orthogonal code of the DMRS is 4, the single-symbol DMRS of the first configuration type can support multiplexing of eight orthogonal DMRS ports, the double-symbol DMRS of the first configuration type can support multiplexing of 16 orthogonal DMRS ports, the single-symbol DMRS of the second configuration type can support multiplexing of 12 orthogonal DMRS ports, and the double-symbol DMRS of the second configuration type can support multiplexing of 24 orthogonal DMRS ports.

However, a specific condition needs to be met when two or more DMRS sequences are orthogonal. For example, when a code length of an OCC of a DMRS of the third configuration type is 2, DMRS sequences are mapped to three subcarriers in one RB. In this case, when a quantity of scheduled RBs is odd, lengths of two or more mapped DMRS sequences on the scheduled RBs whose quantity is odd are not an integer multiple of 2, and the two or more DMRS sequences are not orthogonal. For another example, when a code length of an OCC is 4, for a DMRS of the first configuration type, DMRS sequences are mapped to six subcarriers in one RB. When a quantity of scheduled RBs is odd, lengths of six or more mapped DMRS sequences are not an integer multiple of 4, and the six or more DMRS sequences are not orthogonal. It can be learned that, in the two cases, although the quantity of orthogonal DMRS ports is increased, when a quantity of scheduled RBs is odd, it cannot be ensured that scheduled DMRS sequences are orthogonal.

In embodiments of this application, the "reference signal" is an uplink reference signal or a downlink reference signal. For example, the "reference signal" is an SRS, a CSI-RS, a DMRS, a positioning reference signal, or a PTRS. The "orthogonal code" is a code for generating a reference signal sequence. For example, the orthogonal code is an orthogonal cover code or a cyclic shift code. The DMRS is a DMRS of an uplink channel or a DMRS of a downlink channel. For example, the DMRS is a DMRS of a PDSCH, a DMRS of a PDCCH, a DMRS of a PBCH, a DMRS of a PUSCH, or a DMRS of a PUCCH.

In embodiments of this application, that scheduled masks are orthogonal means that sequences of scheduled reference signals are orthogonal, or that scheduled mask sequences are orthogonal. For example, when the reference signal is the DMRS, that the scheduled masks are orthogonal means that scheduled DMRS sequences are orthogonal.

In embodiments of this application, an example in which the reference signal is the DMRS and the orthogonal code is the cyclic shift code is used for description. It should be noted that the solution of the present invention is also applicable to a case in which the reference signal is another signal, and/or the orthogonal code is another code.

In embodiments of this application, the "first configuration type", the "second configuration type", and the "third configuration type" do not have a sorting feature, and are used to distinguish between different configuration types. Names of the "first configuration type", the "second configuration type", and the "third configuration type" are not limited in embodiments of this application. For example, the "first configuration type", the "second configuration type", and the "third configuration type" may also be referred to as a "configuration type 1", a "configuration type 2", a "configuration type 3", and the like respectively.

Optionally, in embodiments of this application, that reference signals are orthogonal, that reference signal sequences are orthogonal, and that reference signal ports are orthogonal are equivalent.

III. Signal transmission method.

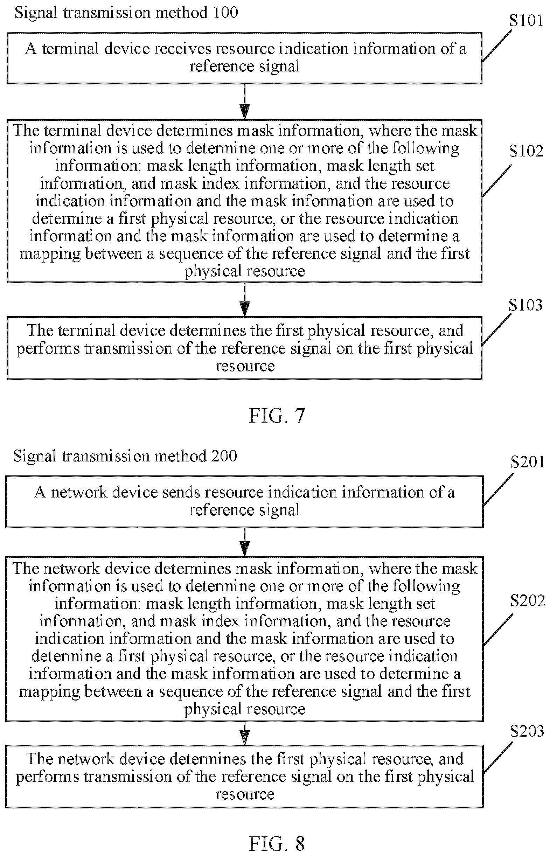

Embodiments of this application provide a signal transmission method 100. FIG. 7 is a schematic flowchart of the signal transmission method 100. The signal transmission method 100 is described from a perspective of a terminal device. The signal transmission method 100 includes but is not limited to the following steps.

S101: The terminal device receives resource indication information of a reference signal.

The resource indication information of the reference signal is configured via higher layer signaling, or is indicated by control information. For example, the resource indication information of the reference signal is configured by a network device via radio resource control (radio resource control, RRC) signaling, or is indicated by a medium access control-control element (medium access control-control element, MAC CE). For another example, the resource indication information of the reference signal is indicated by downlink control information (downlink control information, DCI), or is indicated by sidelink control information (sidelink control information, SCI).

In an optional implementation, the resource indication information of the reference signal indicates a type of the reference signal. For example, the resource indication information of the reference signal is determined by the terminal device based on a higher layer parameter (for example, dmrs-Type).

S102: The terminal device determines mask information, where the mask information is used to determine one or more of the following information: mask length information, mask length set information, and mask index information. The resource indication information of the reference signal and the mask information are used to determine a first physical resource, or the resource indication information and the mask information are used to determine a mapping between a sequence of the reference signal and the first physical resource.

The mask length information includes a mask length, or the mask length information is the mask length. For example, when a mask is an OCC code, the mask length information is a length of the OCC code. For another example, when the mask is a CS code, the mask length information is a length of the CS code. Specifically, for example, the mask length is 2, 3, 4, 6, or 8. The mask length set information is a mask length candidate value set or information about the mask length candidate value set, or may indicate a set of candidate values indicating mask lengths. The mask length set information includes one or more mask lengths. Specifically, for example, a mask length set is {2, 3}, {2, 4}, {2, 3, 4}, or {2, 6}. For another example, the mask length set includes one or more of {1, 2, 3, 4, 5, 6, 7, 8}. The mask index information is an index corresponding to each of one or more mask lengths included in the mask length set. For example, the mask length set includes a mask length a, a mask length b, and a mask length c. An index corresponding to the mask length a is A, an index corresponding to the mask length b is B, and an index corresponding to the mask length c is C.

Optionally, the mask length is K, and K is an integer greater than or equal to 2. For example, K=2, K=3, K=4, K=5, K=6, K=7, or K=8.

In an optional implementation, that the terminal device determines the mask information includes: The terminal device receives first signaling, and determines the mask information based on the first signaling.

In an optional implementation, the first signaling includes a first configuration parameter, and the first configuration parameter indicates the mask information; and/or the first signaling does not include a first configuration parameter, and a value of the mask information is a default value. The first signaling is higher layer signaling sent by the network device. For example, the first signaling is RRC signaling, a MAC CE, DCI signaling, or scrambling information. The first signaling may be but is not limited to: one or more of terminal device-specific radio resource control signaling, cell-specific radio resource control signaling, or a higher layer parameter. In other words, the first signaling may include the first configuration parameter or may not include the first configuration parameter. For example, if the first signaling includes the first configuration parameter, it is determined, based on the first signaling, that the mask information of the reference signal is a value of the first configuration parameter. Alternatively, if the first signaling does not include the first configuration parameter, it is determined, based on the first signaling, that the mask information of the reference signal is the default value. Therefore, the terminal device can determine the mask information based on the first signaling, that is, determine the mask length information.

A candidate value set of the first configuration parameter is predefined. Alternatively, a candidate value set of the first configuration parameter is determined based on information related to transmission of the reference signal. For example, if carriers on which DMRS transmission is performed are different, candidate value sets of the first configuration parameter are different. For another example, if bandwidth parts (bandwidth parts, BWPs) on which DMRS transmission is performed are different, the candidate value sets of the first configuration parameter are different. For still another example, if data types associated with DMRS transmission are different, the candidate value sets of the first configuration parameter are different.

Optionally, when the first signaling does not include the first configuration parameter, the determined default value is the mask length, and the default value is predefined. In other words, when the first signaling received by the terminal device is used to determine the default value, the predefined default value is determined as the mask length, so that the terminal device also determines the mask length information based on the first signaling. For example, if the first signaling does not include the first configuration parameter, it is determined that the mask length is 2, or it is determined that the mask length is 4.

In another optional implementation, the first signaling indicates a fifth set, and the mask length set is the fifth set. The fifth set is {2, 3, 4, 6, 8}; or the fifth set is {1, 2, 3, 4, 5, 6}; or the fifth set is {2, 4}; or the fifth set is {2, 3 }; or the fifth set is a set including one or more of { 1, 2, 3, 4, 5, 6, 7, 8}. The mask length available to the terminal device is included in the fifth set.

In other words, the network device may directly indicate, to the terminal device via the first signaling, a set to which the mask length belongs, to help the terminal device determine the mask length from the fifth set. For example, the network device indicates an element in the fifth set to the terminal device via DCI signaling, and the element indicated by the DCI is a mask length value, so that the terminal device determines the mask length from the fifth set based on the DCI. For another example, the network device indicates a mask index corresponding to an element in the fifth set to the terminal device via the DCI signaling, so that the terminal device determines the mask length from the fifth set based on the mask index.

In another optional implementation, the first signaling indicates a mask length. For example, the mask length indicated by the first signaling is 2 or 4. For another example, the mask length indicated by the first signaling is one of {2, 3, 4, 6}, or the mask length indicated by the first signaling is one of {1, 2, 3, 4, 5, 6, 7, 8}.

Based on the foregoing implementations, a base station may indicate a mask of the terminal device in a semi-static indication manner. In this implementation, the network device may determine the mask length based on information such as a quantity of users, user allocation, a capacity requirement, and a channel state, so that scheduling flexibility of the base station is improved.

In another optional implementation, that the terminal device determines the mask information includes: The terminal device determines the mask information according to a preset rule. The preset rule is a correspondence rule between a configuration type of the reference signal and the mask length, a rule between the configuration type of the reference signal and a set to which the mask length belongs, or the like. The preset rule is predefined.

In an optional implementation, that the terminal device determines the mask information according to the preset rule includes: determining a configuration type of the reference signal based on the resource indication information of the reference signal; and determining the mask information based on the configuration type of the reference signal. In other words, the preset rule is a rule between the configuration type of the reference signal and the mask information.

The configuration type of the reference signal is associated with a mapping mode of the reference signal on a time domain resource and/or a frequency domain resource, and different configuration types of the reference signal correspond to different mapping modes of the reference signal on the time domain resource and/or the frequency domain resource. For a first configuration type, a second configuration type, and a third configuration type, refer to the foregoing descriptions. Details are not described again.

In an optional implementation, the mask length information is a mask length; and the configuration type and the mask length information meet one or more of the following: when the configuration type is a first configuration type, the mask length is 2, 3, or 6; when the configuration type is a second configuration type, the mask length is 2 or 4; and when the configuration type is a third configuration type, the mask length is 2 or 3. For example, if the configuration type is a type 1, a mask length candidate value is 2, and if the configuration type is a type 2, mask length candidate values are 2 and 4. For another example, if the configuration type is the type 1, mask length candidate values are 2 and 3, and if the configuration type is the type 2, mask length candidate values are 2 and 4. Alternatively, if the configuration type is the type 1, mask length candidate values are 2 and 6. For still another example, if the configuration type is the third configuration type, mask length candidate values are 2 and 3.

In this implementation, when the configuration type of the reference signal is determined, the mask length is a fixed value. For example, when the configuration type of the reference signal is the first configuration type, the mask length is 2. For another example, when the configuration type of the reference signal is the second configuration type, the mask length is 3. For another example, when the configuration type of the reference signal is the first configuration type, the mask length is 6.

Optionally, when the configuration type of the reference signal is determined, the mask length is a value indicated by the network device from the mask length set. For example, when the configuration type of the reference signal is the first configuration type, the mask length is 2, 3, or 6, and a specific value of the mask is indicated by the network device from 2, 3, and 6. For example, if the network device indicates 3, the mask length is 3. For another example, if the network device indicates 6, the mask length is 6.

In another optional implementation, the mask length information is a mask length, and the configuration type and the mask length set information meet: when the configuration type is a type 1, the mask length is 2; when the configuration type is a type 2, the mask length is 2; and when the configuration type is a third configuration type, the mask length is 3.

It can be learned that the resource indication information of the reference signal may indicate different configuration types of the reference signal. When configuration types of the reference signal indicated by the resource indication information of the reference signal are different, values of mask lengths of the reference signals are also different. Therefore, the terminal device can determine the mask length based on the configuration type of the reference signal indicated by the resource indication information of the reference signal, that is, determine the mask length information. For different configuration types, mappings of the reference signal on a physical resource are different. Therefore, requirements for the mask length are different. Based on the foregoing implementations, it can be ensured that different configuration types correspond to appropriate mask lengths, and orthogonality between different reference signal ports is better ensured.

In addition, when the configuration type of the reference signal is the first configuration type, and the reference signal is mapped to one OFDM symbol of a time domain resource, a sequence of a same reference signal is mapped to six subcarriers in one RB. In this case, when the mask length is 2, regardless of a quantity of RBs scheduled by the terminal device, on the scheduled RBs, because sequence lengths of mapped or communicated reference signals are all an integer multiple of 2, it can be ensured that masks or mask sequences of the scheduled reference signals are orthogonal, that is, it is ensured that the scheduled reference signals whose transmission is performed on a same time-frequency resource are orthogonal. When the mask length is 3, regardless of a quantity of RBs scheduled by the terminal device, on the scheduled RBs, because sequence lengths of mapped or communicated reference signals are all an integer multiple of 3, it can also be ensured that masks or mask sequences of the scheduled reference signals are orthogonal. When the mask length is 6, regardless of a quantity of RBs scheduled by the terminal device, on the scheduled RBs, because sequence lengths of mapped reference signals are all an integer multiple of 6, it can also be ensured that scheduled masks are orthogonal. Similarly, when the configuration type of the reference signal is the first configuration type, and the reference signal is mapped to two OFDM symbols of the time domain resource, the mask length is 2, 3, or 6, and it is ensured that the scheduled masks are orthogonal regardless of the quantity of RBs scheduled by the terminal device. Based on the foregoing descriptions, when the configuration type of the reference signal is the first configuration type, and the mask length is 2, 3, or 6, the scheduled masks are orthogonal regardless of the quantity of resource blocks scheduled by the terminal device.

When the configuration type of the reference signal is the second configuration type, and the reference signal is mapped to one OFDM symbol of a time domain resource, a sequence of a same reference signal is mapped to four subcarriers in one RB. In this case, when the mask length is 2, regardless of a quantity of RBs scheduled by the terminal device, on the scheduled RBs, because sequence lengths of mapped or communicated reference signals are all an integer multiple of 2, it can be ensured that masks or mask sequences of the scheduled reference signals are orthogonal, that is, it can be ensured that the scheduled reference signals whose transmission is performed on a same time-frequency resource are orthogonal. When the mask length is 4, regardless of a quantity of RBs scheduled by the terminal device, on the scheduled RBs, because sequence lengths of mapped or communicated reference signals are all an integer multiple of 4, it can also be ensured that masks or mask sequences of the scheduled reference signals are orthogonal. Similarly, when the configuration type of the reference signal is the second configuration type, the reference signal is mapped to two OFDM symbols of the time domain resource, and the mask length is 2 or 4, it is also ensured that the scheduled masks are orthogonal regardless of the quantity of RBs scheduled by the terminal device.

When the configuration type of the reference signal is the third configuration type, and the reference signal is mapped to one OFDM symbol of a time domain resource, a sequence of a same reference signal is mapped to three subcarriers in one RB. When the mask length is 3, regardless of a quantity of RBs scheduled by the terminal device, on the scheduled RBs, because sequence lengths of mapped or communicated reference signals are all an integer multiple of 3, it can be ensured that masks or mask sequences of the scheduled reference signals are orthogonal. Similarly, when the configuration type of the reference signal is the third configuration type, the reference signal is mapped to two OFDM symbols of the time domain resource, and the mask length is 3, it is also ensured that the masks or the mask sequences of the scheduled reference signals are orthogonal regardless of the quantity of RBs scheduled by the terminal device. When the mask length is 2, it cannot be ensured that the scheduled masks are orthogonal when the terminal device schedules an odd quantity of RBs. However, in this manner, the terminal device can be compatible with a mask whose length is 2. In other words, the terminal device using this solution and the terminal device using the mask whose length is 2 can perform transmission of the reference signal on the same time-frequency resource, so that backward compatibility is ensured.

In another optional implementation, the configuration type and the mask information meet one or more of the following: when the configuration type is a first configuration type, the mask length set is a first set; when the configuration type is a second configuration type, the mask length set is a second set; and when the configuration type is a third configuration type, the mask length set is a third set.

It can be learned that the resource indication information of the reference signal may indicate different configuration types, and when the resource indication information of the reference signal indicates different configuration types, mask length candidate value sets are different. Therefore, the terminal device can determine a mask length candidate value based on the configuration type indicated by the resource indication information of the reference signal.

In an optional implementation, the first set includes one or more of 2, 3, and 6; or the second set includes one or more of 2 and 4; or the third set includes one or more of 2 and 3. It can be learned that different sets include different mask length candidate values. Therefore, the terminal device determines the mask length based on at least the mask length set. For example, if the terminal device determines, based on the resource indication information of the reference signal, that the mask length set is the first set, and the terminal device receives DCI from the network device, where the DCI indicates a mask index corresponding to 3 in the first set, the terminal device determines that the mask length is 3.

It can be learned from the foregoing descriptions that when the configuration type of the reference signal is the first configuration type, and the mask length is 2, 3, or 6, the scheduled masks may be orthogonal regardless of the quantity of RBs scheduled by the terminal device. When the configuration type of the reference signal is the second configuration type, and the mask length is 2 or 4, the scheduled masks may be orthogonal regardless of the quantity of RBs scheduled by the terminal device. When the configuration type of the reference signal is the third configuration type, and the mask length is 3, the scheduled masks may be orthogonal regardless of the quantity of RBs scheduled by the terminal device. Therefore, in the corresponding configuration type, when the mask length is 3, 4, or 6, a quantity of orthogonal ports can be increased while ensuring that the scheduled masks are orthogonal, thereby increasing a quantity of terminal devices that can be scheduled. When the configuration type of the reference signal is the third configuration type, and the mask length is 2, the terminal device can be compatible with a mask length in a current protocol.

Optionally, when the configuration type of the reference signal is the first configuration type, the mask length may be any value of an integer multiple of 2; when the configuration type of the reference signal is the second configuration type, the mask length may be any value of an integer multiple of 4; and when the configuration type of the reference signal is the third configuration type, the mask length may be any value of an integer multiple of 3. In this manner, regardless of the quantity of RBs scheduled by the terminal device, the scheduled masks are orthogonal. This can increase a quantity of orthogonal ports while ensuring that the masks are orthogonal, so as to increase a quantity of terminal devices that can be scheduled. In this manner, the quantity of RBs scheduled by the terminal device may not be limited.

It can be learned that the terminal device may obtain the configuration type of the reference signal by receiving the resource indication information from the network device, or obtain, via the first signaling from the network device, the fifth set to which the mask length belongs, to help the terminal device determine the mask information.

The terminal device may directly or indirectly determine the mask information based on the resource indication information. For example, when the terminal device and the network device predefine different configuration types of the reference signal in a protocol, mask lengths have different values, and the terminal device may directly determine the mask length based on the configuration type of the reference signal indicated by the resource indication information. For another example, when the terminal device and the network device predefine different configuration types of the reference signal in a protocol, sets to which mask lengths belong are different, and the terminal device may determine, based on the configuration type indicated by the resource indication information, a set to which the mask length belongs, and then determine the mask length based on signaling delivered by the network device.

For example, when the resource indication information indicates that the configuration type of the reference signal is the first configuration type, the terminal device may determine that the mask length is 2, 3, or 6, or determine that the mask length belongs to the first set, where the first set includes one or more of 2, 3, and 6.

For example, when the resource indication information indicates that the configuration type of the reference signal is the second configuration type, the terminal device may determine that the mask length is 2 or 4, or determine that the mask length belongs to the second set, where the second set includes one or more of 2 and 4.

For example, when the resource indication information indicates that the configuration type of the reference signal is the third configuration type, the terminal device may determine that the mask length is 2 or 3, or determine that the mask length belongs to the third set, where the third set includes one or more of 2 and 3.

In still another optional implementation, when the network device indicates the fifth set via the first signaling, the terminal device may determine the mask length from the fifth set. For example, the terminal device determines the mask length from the fifth set based on a mask index sent by the network device.

It can be learned that when the mask length determined by the terminal device is one of 2, 3, 4, or 6, or is an integer multiple of one of 2, 3, 4, or 6, regardless of a value of the mask length determined by the terminal device, it can be ensured that masks scheduled by the terminal device are orthogonal, or the terminal device is compatible with a mask whose code length is 2.

In an optional implementation, different configuration types of the reference signal correspond to different mask lengths; and/or a quantity of elements included in the first set is different from a quantity of elements included in the second set. It can be learned that when the configuration types are different, the mask lengths are different; or when the configuration types are different, quantities of elements included in the mask length sets are different; or when the configuration types are the same, the mask lengths are different; or when the configuration types are the same, quantities of elements included in the mask length sets are different.

In other words, when the configuration types of the reference signal are different, the mask lengths corresponding to the different configuration types are different. For example, when the configuration type of the reference signal is the first configuration type, the mask length is 2; and when the configuration type of the reference signal is the second configuration type, the mask length is 2 or 4. Alternatively, when the configuration types are different, the quantities of elements included in the mask length sets are different. For example, when the configuration type of the reference signal is the first configuration type, the mask length set include x elements of 2, 3, and 6; and when the configuration type of the reference signal is the second configuration type, the mask length set includes y elements of 2 and 4, where x is not equal to y. For another example, when the configuration type of the reference signal is the first configuration type, the mask length set includes only 2; and when the configuration type of the reference signal is the second configuration type, the mask length set includes 2 and 4.

Alternatively, when the configuration types of the reference signal are the same, the mask lengths determined based on the configuration types are still different. For example, when the configuration type of the reference signal is the first configuration type, and a comb of the reference signal is 2, the mask length is 2; and when the configuration type of the reference signal is the first configuration type, and the comb of the reference signal is 4, the mask length is 3 or 6. Alternatively, when the configuration types are the same, the quantities of elements included in the mask length sets are different. For example, when the configuration type is the first configuration type, and a comb of the reference signal is 4, the mask length set includes two elements 2 and 3; and when the configuration type of the reference signal is the first configuration type, and the comb of the reference signal is 4, the mask length set includes three elements 2, 3, and 6.

In an optional implementation, the terminal device may further report first reporting information to the network device, where the first reporting information indicates mask information supported by the terminal device. The mask information may be a mask length supported by the terminal device, may be a value range of the mask length supported by the terminal device, or may be a plurality of candidate values of the mask length supported by the terminal device.

Optionally, the network device performs indication on the mask information based on the information reported by the terminal device. Based on this implementation, the terminal device may report mask length information to the network device via the first reporting information, so that the network device determines the resource indication information with reference to the mask length information reported by the terminal device. When the terminal device has different capabilities, mask lengths that can be supported are different, candidate values of masks that can be supported are different, or quantities of candidate values of the masks that can be supported are different. Therefore, when the base station configures the mask information, an implementation capability of the terminal device is not exceeded.

In still another optional implementation, a mask length set of a reference signal for a first channel is a fourth set; a mask length set of a reference signal for a second channel is a sixth set; the first channel and the second channel are different channels; and the fourth set and the sixth set are different sets. The first channel includes one or more of the following: a physical uplink shared channel, a physical uplink control channel, a physical downlink shared channel, a physical downlink control channel, and a physical broadcast channel. The second channel includes one or more of the following: a physical uplink shared channel, a physical uplink control channel, a physical downlink shared channel, a physical downlink control channel, and a physical broadcast channel.

The first channel and the second channel are channels of different types, channels used for transmission of different data, different time domain resources and/or frequency domain resources, or different time domain resources and/or frequency domain resources used for transmission of same information. For example, the first channel is a PUSCH, and the second channel is a PUCCH. For another example, the first channel is a PUSCH, and the second channel is a PDSCH. For another example, the first channel is a PBCH, and the second channel is a PDSCH. For another example, the first channel is a first PDSCH, and the second channel is a second PDSCH. For another example, the first channel is a first carrier, and the second channel is a second carrier. For another example, the first channel is a first BWP, and the second channel is a second BWP.

It can be learned that when the reference signal is associated with different channels, mask length sets of the reference signal associated with the different channels are different sets. Therefore, the terminal device may determine a mask length set of the reference signal based on a type of a channel for transmission of the reference signal, and the terminal device determines a mask length from the determined length set based on signaling sent by the network device.

For example, the first channel is a PBCH, the second channel is a PDSCH, an $X^{th}$ set is {2, 4}, and a $Y^{th}$ set is {2}. For another example, the first channel is a PUSCH, the second channel is a PDSCH, the $X^{th}$ set is {2}, and the $Y^{th}$ set is {2, 4}. For another example, the first channel is a PUSCH, the second channel is a PDSCH, the $X^{th}$ set is {2, 3}, and the $Y^{th}$ set is {2, 4}.

S103: The terminal device determines the first physical resource, and performs transmission of the reference signal on the first physical resource.

The first physical resource is a time resource and/or a frequency resource, and the first physical resource is used for transmission of the reference signal. For example, the first physical resource is a resource element used for transmission of the reference signal. Alternatively, the first physical resource is a subcarrier used for transmission of the reference signal.

The resource indication information of the reference signal and/or the mask information are/is used to determine the first physical resource, or the resource indication information of the reference signal and the mask information are used to determine the mapping between the sequence of the reference signal and the first physical resource.

In a possible implementation, the resource indication information and the mask information are used to determine the first physical resource. The terminal device determines the first physical resource based on the resource indication information and the mask information. When the resource indication information and the mask information are used to determine the mapping between the sequence of the reference signal and the first physical resource, the terminal device determines the first physical resource based on the mapping between the sequence of the reference signal and the first physical resource.

It may be understood that the terminal device determines, based on resource allocation information and the resource indication information, a physical resource block used for transmission of the reference signal, and then the terminal device determines, based on the mask information, a subcarrier used for transmission of the reference signal in the physical resource block. Therefore, the terminal device performs transmission of the reference signal on the determined subcarrier.

In a possible implementation, the terminal device receives data scheduling information, and determines, based on the data scheduling information, a second physical resource used to send data. That the resource indication information and the mask information are used to determine the first physical resource means that the terminal device determines the first physical resource based on the data scheduling information, the resource indication information, and the mask information. The first physical resource is included in the second physical resource. For example, the second physical resource is a resource block used for transmission of data, and the resource indication information indicates a type of the reference signal. The terminal device determines, based on the data scheduling information, a resource block used for transmission of the reference signal, and determines, in the determined resource block based on the type of the reference signal, a subcarrier used for transmission of the reference signal. The terminal device determines codes corresponding to the reference signal on different subresources of the first physical resource based on the mask information. There is an association relationship between the data and the reference signal. For example, the reference signal is a reference signal of the data, the reference signal is used to measure a channel for transmission of the data, or information about a channel used for transmission of the reference signal is the same as information about a channel used for transmission of the data. When the resource indication information and the mask information are used to determine the mapping between the sequence of the reference signal and the first physical resource, the terminal device determines the first physical resource based on the mapping between the sequence of the reference signal and the first physical resource.

In a possible implementation, the terminal device determines the first physical resource based on the resource indication information of the reference signal and resource allocation information. The resource allocation information is information indicating a physical resource used for data transmission. For example, the resource allocation information indicates a resource block used for data or reference signal transmission, and the resource allocation information is frequency domain resource information for data transmission, or the resource allocation information is time domain resource information for data transmission. For example, the resource allocation information is a common resource block allocated for data transmission. The data is one or more of the following: a physical uplink shared channel, a physical uplink control channel, a physical downlink shared channel, a physical downlink control channel, and a physical broadcast channel.

The resource allocation information may be configured via higher layer signaling, indicated by DCI, or predefined. For example, the resource allocation information is configured via a higher layer parameter *resourceAllocation*, or the resource allocation information is indicated by a *Frequency domain resource assignment* field. The first physical resource is one or more subcarriers in one or more resource blocks. The first physical resource is a subcarrier or a resource element used for reference signal transmission.

The mask information determined by the terminal device is determined based on the configuration type of the reference signal indicated by the resource indication information. Therefore, orthogonality between scheduled masks is considered for the determined mask length. In other words, regardless of the quantity of RBs scheduled by the terminal device, it can be ensured that the masks scheduled by the terminal device are orthogonal. Therefore, the first physical resource determined by the terminal device based on the resource indication information and the mask information may be any RB in a resource that may be used for data transmission and that is indicated by the resource allocation information.

The resource allocation information is information indicating data transmission. The resource allocation information is frequency domain resource information for data transmission, or the resource allocation information is time domain resource information for data transmission. For example, the resource allocation information is a common resource block allocated for PDSCH transmission or a common resource block allocated for PUSCH transmission. The first physical resource is one or more resource elements in M resource blocks. The M resource blocks are some resource blocks in the resource indicated by the resource allocation information. M is an integer greater than or equal to 1.

Optionally, the terminal device determines the mask length, and the terminal device determines, based on the determined mask information, the first physical resource block or a subcarrier used for transmission of the reference signal, so as to ensure that scheduled orthogonal codes are orthogonal. For example, when the configuration type of the reference signal is the third configuration type, the terminal device determines that the mask length is 2, and if the terminal device schedules an odd quantity of RBs, scheduled masks are not orthogonal. In this case, the terminal device determines, based on the mask length, an even quantity of RBs in a physical resource indicated by the resource allocation information, so that the scheduled mask is an integer multiple of 2, and orthogonal codes scheduled by the terminal device are orthogonal.

In another implementation, the terminal device determines, based on one or more of the resource allocation information, the resource indication information, and the mask information, a subcarrier used for transmission of the reference signal, where a total quantity of subcarriers used for transmission of the reference signal is an integer multiple of the mask length.

It may be understood that the terminal device may determine, based on the configuration type of the reference signal indicated by the resource indication information, a subcarrier used for transmission of the reference signal on one RB.

For example, if the configuration type of the reference signal indicated by the resource indication information is the first configuration type, subcarriers used for transmission of the reference signal on one RB are a 1st subcarrier, a 3rd subcarrier, a 5th subcarrier, a 7th subcarrier, a 9th subcarrier, and an 11th subcarrier on the RB, that is, subcarriers whose index numbers are 0, 2, 4, 6, 8, and 10 on the RB. For another example, if the configuration type of the reference signal indicated by the resource indication information is the second configuration type, subcarriers used for transmission of the reference signal on one RB are a 1st subcarrier, a 2nd subcarrier, a 7th subcarrier, and an 8th subcarrier on the RB, that is, subcarriers whose index numbers are 0, 1, 6, and 7 on the RB. For another example, if the configuration type of the reference signal indicated by the resource indication information is the third configuration type, subcarriers used for transmission of the reference signal on one RB are a 1st subcarrier, a 5th subcarrier, and a 9th subcarrier on the RB, that is, subcarriers whose index numbers are 0, 4, and 8 on the RB.

In an optional implementation, the mapping between the sequence of the reference signal or the reference signal and the first physical resource meets at least one of the following: when the configuration type is the first configuration type, $k = 2K \cdot n + 2k' + \triangle$; when the configuration type is the second configuration type, $k = (4 + K) \cdot n + k' + \triangle$; and when the configuration type is the third configuration type, $k = 4K \cdot n + 4k' + \triangle$.

$k$ is a frequency domain resource index in the first physical resource, $K$ is the mask length, $k' = 0, 1, ..., K-1$, $\triangle$ is a group number of a code-division multiplexing CDM group, and $n$ is an integer greater than or equal to 0.

Optionally, k is associated with one or more of the mask length, the group number of the CDM group, a reference signal sequence index, and a mask sequence index.

It should be uniformly noted that $k = 2K \cdot n + 2k' + \triangle$, $k = (4 + K) \cdot n + k' + \triangle$, or $k = 4K \cdot n + 4k' + \triangle$ are not limited to a case in which a value of k is definitely obtained according to the formula provided in the present invention. The formula in the present invention provides a mapping relationship between k and the mask length. All results that have a same mapping relationship as the mapping relationship between k and the mask length in the present invention but are obtained according to different implementations are content protected by the present invention. Therefore, in the present invention, k obtained according to $k = 2K \cdot n + 2k' + \triangle$, $k = (4 + K) \cdot n + k' + \triangle$, or $k = 4K \cdot n + 4k' + \triangle$ is not limited to be obtained through calculation by using the example formula of the present invention.

Optionally, $k$ may be an index of the frequency domain resource in the first physical resource relative to a frequency domain resource reference point, or may be an offset value of the frequency domain resource in the first physical resource relative to the frequency domain resource reference point.

When the configuration types of the reference signal are different, mapping modes of the reference signal on the frequency domain resource are different, so that mapping relationships between the reference signal and the frequency domain resource in the first physical resource are different.

For example, when the reference signal is a DMRS and the mask length is 6, a mapping relationship between a DMRS sequence whose frequency domain index is $2n + k'$ in the first physical resource and a frequency domain resource whose frequency domain index is $k$ in the first physical resource is:

$$k = \begin{cases} 12 \cdot n + 2k' + \triangle & \text{first configuration type} \\ 10 \cdot n + k' + \triangle & \text{second configuration type} \\ 24 \cdot n + 4k' + \triangle & \text{third configuration type} \end{cases} \quad (2)$$

$k' = 0,1,...,5$, and $n$ is an integer greater than or equal to 0.

In other words, when the configuration type of the reference signal is the first configuration type, the value of $k$ is equal to $12 \cdot n + 2k' + \triangle$; when the configuration type of the reference signal is the second configuration type, the value of $k$ is equal to $10 \cdot n + k' + \triangle$; and when the configuration type of the reference signal is the third configuration type, the value of $k$ is equal to $24 \cdot n + 4k' + \triangle$.

Optionally, k is associated with one or more of the mask length, the group number of the CDM group, a reference signal sequence index, and a mask sequence index.

It should be uniformly noted that the mapping is not limited to a case in which the value of k is definitely obtained according to the formula provided in the present invention. The formula in the present invention provides a mapping relationship between k and the mask length. All results that have a same mapping relationship as the mapping relationship between k and the mask length in the present invention but are obtained according to different implementations are content protected by the present invention. Therefore, in the present invention, k is not limited to be obtained through calculation by using the example formula of the present invention.

One CDM group of the DMRS includes six orthogonal DMRS ports, and the DMRS is mapped to subcarriers whose indexes are subcarrier 0, subcarrier 2, subcarrier 4, subcarrier 6, subcarrier 8, and subcarrier 10 on a frequency domain resource of each RB. When the mask length is 6, a mask of each port on each subcarrier may be shown in Table 5.

**Table 5**

|  | Port 1 | Port 2 | Port 3 | Port 4 | Port 5 | Port 6 |
|---|---|---|---|---|---|---|
| Subcarrier 0 | +1 | +1 | $e^{j0}$ | $e^{j0}$ | $e^{j0}$ | $e^{j0}$ |
| Subcarrier 2 | +1 | -1 | $e^{j\frac{2\pi}{3}}$ | $e^{j\frac{5\pi}{3}}$ | $e^{j\frac{4\pi}{3}}$ | $e^{j\frac{\pi}{3}}$ |
| Subcarrier 4 | +1 | +1 | $e^{j\frac{4\pi}{3}}$ | $e^{j\frac{4\pi}{3}}$ | $e^{j\frac{2\pi}{3}}$ | $e^{j\frac{2\pi}{3}}$ |
| Subcarrier 6 | +1 | -1 | $e^{j0}$ | $e^{j\pi}$ | $e^{j0}$ | $e^{j\pi}$ |
| Subcarrier 8 | +1 | +1 | $e^{j\frac{2\pi}{3}}$ | $e^{j\frac{2\pi}{3}}$ | $e^{j\frac{4\pi}{3}}$ | $e^{j\frac{4\pi}{3}}$ |
| Subcarrier 10 | +1 | -1 | $e^{j\frac{4\pi}{3}}$ | $e^{j\frac{\pi}{3}}$ | $e^{j\frac{2\pi}{3}}$ | $e^{j\frac{5\pi}{3}}$ |

In an optional implementation, a port numbering rule in current protocol Release (for example, protocol Release 16 or protocol Release 17) remains unchanged, and an extended port in this solution is numbered after a port number in current protocol Release. For example, in current protocol Release, port numbers of the first configuration type are 1000 to 1007, and enhanced port numbers start from 1008. Alternatively, port numbers of the second configuration type are 1000 to 1011, and enhanced port numbers start from 1012.

It should be uniformly noted that port numbers in the present invention have an offset of 1000 between an uplink reference signal and a downlink reference signal. A port number of the uplink reference signal starts from 0, and a port number of the downlink reference signal starts from 1000.

For example, when the reference signal is a DMRS, the configuration type of the reference signal indicated by the resource indication information is the first configuration type, and the mask length is 6, values of parameters in Formula (2) may refer to the following Table 6.

**Table 6**

| p | CDM group | $\triangle$ | $w_f(k')$ | | | | | | $w_t(l)$ | |
|---|---|---|---|---|---|---|---|---|---|---|
| | | | $k'=0$ | $k'=1$ | $k'=2$ | $k'=3$ | $k'=4$ | $k'=5$ | $l = 0$ | $l = 1$ |
| 1000 | 0 | 0 | +1 | +1 | +1 | +1 | +1 | +1 | +1 | +1 |
| 1001 | 0 | 0 | +1 | -1 | +1 | -1 | +1 | -1 | +1 | +1 |
| 1002 | 1 | 1 | +1 | +1 | +1 | +1 | +1 | +1 | +1 | +1 |

(continued)

| $p$ | CDM group | △ | $w_f(k')$ | | | | | | $w_t(l)$ | |
|---|---|---|---|---|---|---|---|---|---|---|
| | | | $k'$=0 | $k'$=1 | $k'$=2 | $k'$=3 | $k'$=4 | $k'$=5 | $l = 0$ | $l = 1$ |
| 1003 | 1 | 1 | +1 | -1 | +1 | -1 | +1 | -1 | +1 | +1 |
| 1004 | 0 | 0 | +1 | +1 | +1 | +1 | +1 | +1 | +1 | -1 |
| 1005 | 0 | 0 | +1 | -1 | +1 | -1 | +1 | -1 | +1 | -1 |
| 1006 | 1 | 1 | +1 | +1 | +1 | +1 | +1 | +1 | +1 | -1 |
| 1007 | 1 | 1 | +1 | -1 | +1 | -1 | +1 | -1 | +1 | -1 |
| P | CDM group | Δ | $w_f(k')$ | | | | | | $w_t(l')$ | |
| | | | $k' =0$ | $k'=1$ | $k =2$ | $k =3$ | $k'=4$ | $k =5$ | $l' = 0$ | $l' =1$ |
| 1008 | 0 | 0 | $e^{j0}$ | $e^{j\frac{2\pi}{3}}$ | $e^{j\frac{4\pi}{3}}$ | $e^{j0}$ | $e^{j\frac{2\pi}{3}}$ | $e^{j\frac{4\pi}{3}}$ | +1 | +1 |
| 1009 | 0 | 0 | $e^{j0}$ | $e^{j\frac{5\pi}{3}}$ | $e^{j\frac{4\pi}{3}}$ | $ej77$ | $e^{j\frac{2\pi}{3}}$ | $e^{j\frac{\pi}{3}}$ | +1 | +1 |
| 1010 | 1 | 1 | $e^{j0}$ | $e^{j\frac{2\pi}{3}}$ | $e^{j\frac{4\pi}{3}}$ | $e^{j0}$ | $e^{j\frac{2\pi}{3}}$ | $e^{j\frac{4\pi}{3}}$ | +1 | +1 |
| 1011 | 1 | 1 | $e^{j0}$ | $e^{j\frac{5\pi}{3}}$ | $e^{j\frac{4\pi}{3}}$ | $ej77$ | $e^{j\frac{2\pi}{3}}$ | $e^{j\frac{\pi}{3}}$ | +1 | +1 |
| 1012 | 0 | 0 | $e^{j0}$ | $e^{j\frac{4\pi}{3}}$ | $e^{j\frac{2\pi}{3}}$ | $e^{j0}$ | $e^{j\frac{4\pi}{3}}$ | $e^{j\frac{2\pi}{3}}$ | +1 | +1 |
| 1013 | 0 | 0 | $e^{j0}$ | $e^{j\frac{\pi}{3}}$ | $e^{j\frac{2\pi}{3}}$ | $ej71$ | $e^{j\frac{4\pi}{3}}$ | $e^{j\frac{5\pi}{3}}$ | +1 | +1 |
| 1014 | 1 | 1 | $e^{j0}$ | $e^{j\frac{4\pi}{3}}$ | $e^{j\frac{2\pi}{3}}$ | $e^{j0}$ | $e^{j\frac{4\pi}{3}}$ | $e^{j\frac{2\pi}{3}}$ | +1 | +1 |
| 1015 | 1 | 1 | $e^{j0}$ | $e^{j\frac{\pi}{3}}$ | $e^{j\frac{2\pi}{3}}$ | $ej7f$ | $e^{j\frac{4\pi}{3}}$ | $e^{j\frac{5\pi}{3}}$ | +1 | +1 |
| 1016 | 0 | 0 | $e^{0j}$ | $e^{j\frac{2\pi}{3}}$ | $e^{j\frac{4\pi}{3}}$ | $e^{j0}$ | $e^{j\frac{2\pi}{3}}$ | $e^{j\frac{4\pi}{3}}$ | +1 | +1 |
| 1017 | 0 | 0 | $e^{0j}$ | $e^{j\frac{5\pi}{3}}$ | $e^{j\frac{4\pi}{3}}$ | $e^{j\pi}$ | $e^{j\frac{2\pi}{3}}$ | $e^{j\frac{\pi}{3}}$ | +1 | -1 |
| 1018 | 1 | 1 | $e^{0j}$ | $e^{j\frac{2\pi}{3}}$ | $e^{j\frac{4\pi}{3}}$ | $e^{j0}$ | $e^{j\frac{2\pi}{3}}$ | $e^{j\frac{4\pi}{3}}$ | +1 | -1 |
| 1019 | 1 | 1 | $e^{0j}$ | $e^{j\frac{5\pi}{3}}$ | $e^{j\frac{4\pi}{3}}$ | $e^{j\pi}$ | $e^{j\frac{2\pi}{3}}$ | $e^{j\frac{\pi}{3}}$ | +1 | -1 |
| 1020 | 0 | 0 | $e^{0j}$ | $e^{j\frac{4\pi}{3}}$ | $e^{j\frac{2\pi}{3}}$ | $e^{j0}$ | $e^{j\frac{4\pi}{3}}$ | $e^{j\frac{2\pi}{3}}$ | +1 | -1 |
| 1021 | 0 | 0 | $e^{0j}$ | $e^{j\frac{\pi}{3}}$ | $e^{j\frac{2\pi}{3}}$ | $ej7f$ | $e^{j\frac{4\pi}{3}}$ | $e^{j\frac{5\pi}{3}}$ | +1 | -1 |
| 1022 | 1 | 1 | $e^{0j}$ | $e^{j\frac{4\pi}{3}}$ | $e^{j\frac{2\pi}{3}}$ | $e^{j0}$ | $e^{j\frac{4\pi}{3}}$ | $e^{j\frac{2\pi}{3}}$ | +1 | -1 |
| 1023 | 1 | 1 | $e^{0j}$ | $e^{j\frac{\pi}{3}}$ | $e^{j\frac{2\pi}{3}}$ | $e^{j\pi}$ | $e^{j\frac{4\pi}{3}}$ | $e^{j\frac{5\pi}{3}}$ | +1 | -1 |

Masks of different ports are predefined, or are delivered by the network device to the terminal device. When the mask lengths are different, masks and mapping parameters of different ports are different.

For example, when the reference signal is a DMRS and the mask length is 4, a mapping relationship between a DMRS sequence and a frequency domain resource in the first physical resource is:

$$k = \begin{cases} 8 \cdot n + 2k' + \Delta & \text{first configuration type} \\ 8 \cdot n + k' + \Delta & \text{second configuration type} \\ 16 \cdot n + 4k' + \Delta & \text{third configuration type} \end{cases} \quad (3)$$

$k'$ = 0,1,3 , and $n$ is an integer greater than or equal to 0.

For example, when the reference signal is a DMRS, the configuration type of the reference signal indicated by the resource indication information is the first configuration type, and the mask length is 4, values of parameters in Formula (3) may refer to the following Table 7.

**Table 7**

| P | CDM group | $\Delta$ | $w_f(k')$ | | | | w,($l'$) | |
|---|---|---|---|---|---|---|---|---|
| | | | $k'$=0 | $k'$=1 | $k'$=2 | $k'$=3 | $l'$ = 0 | $l'$ =1 |
| 1000 | 0 | 0 | +1 | +1 | +1 | +1 | +1 | +1 |
| 1001 | 0 | 0 | +1 | -1 | +1 | -1 | +1 | +1 |
| 1002 | 1 | 1 | +1 | +1 | +1 | +1 | +1 | +1 |
| 1003 | 1 | 1 | +1 | -1 | +1 | -1 | +1 | +1 |
| 1004 | 0 | 0 | +1 | +1 | +1 | +1 | +1 | -1 |
| 1005 | 0 | 0 | +1 | -1 | +1 | -1 | +1 | -1 |
| 1006 | 1 | 1 | +1 | +1 | +1 | +1 | +1 | -1 |
| 1007 | 1 | 1 | +1 | -1 | +1 | -1 | +1 | -1 |
| 1008 | 0 | 0 | +1 | +j | -1 | -j | +1 | +1 |
| 1009 | 0 | 0 | +1 | -j | -1 | +j | +1 | +1 |
| 1010 | 1 | 1 | +1 | +j | -1 | -j | +1 | +1 |
| 1011 | 1 | 1 | +1 | -j | -1 | +j | +1 | +1 |
| 1012 | 0 | 0 | +1 | +j | -1 | -j | +1 | -1 |
| 1013 | 0 | 0 | +1 | -j | -1 | +j | +1 | -1 |
| 1014 | 1 | 1 | +1 | +j | -1 | -j | +1 | -1 |
| 1015 | 1 | 1 | +1 | -j | -1 | +j | +1 | -1 |

In Table 7, a cyclic shift code whose length is 4 is used as an example for a port number encoding manner, and another mask (for example, a Hadamard matrix) is also applicable.

For example, when the reference signal is a DMRS and the mask length K is 3, a mapping relationship between a DMRS sequence and a frequency domain resource in the first physical resource is:

$$k = \begin{cases} 6 \cdot n + 2k' + \Delta & \text{first configuration type} \\ 7 \cdot n + k' + \Delta & \text{second configuration type} \\ 12 \cdot n + 4k' + \Delta & \text{third configuration type} \end{cases} \quad (4)$$

$k'$ = 0,1,...,2, and $n$ is an integer greater than or equal to 0.

In an optional implementation, when the reference signal is a DMRS, regardless of a value of K, for a mapping relationship between the DMRS and a time domain resource in the first physical resource, refer to Formula (1). Details are not described again.

It can be learned that the mapping relationship between the reference signal and the first physical resource is determined based on the mask length, that is, a resource to which the reference signal is mapped on the first physical resource matches the mask length. In this case, when the mask length is greater than 2, a quantity of orthogonal ports in one CDM group may be increased, so as to increase a quantity of orthogonal ports of the reference signal. It can be learned from the foregoing descriptions that this manner helps ensure that orthogonal codes scheduled by the terminal device are orthogonal. When the mask length is equal to 2, the terminal device also maps the sequence of the reference signal to the first physical resource based on the mapping relationship in the current protocol, so that the terminal device is compatible with a mask whose code length is 2 in the current protocol.

It can be learned that the terminal device maps the reference signal to the first physical resource through the mapping between the sequence of the reference signal and the first physical resource, so that the terminal device can determine the first physical resource based on the mapping between the sequence of the reference signal and the first physical resource and perform transmission of the reference signal on the first physical resource.

For example, as shown in FIG. 3(a), the terminal device maps the reference signal to subcarriers of the port 1000, the port 1001, the port 1002, and the port 1003 via the mapping relationship. Therefore, the terminal device performs transmission of the reference signal on each subcarrier to which the reference signal is mapped in an RB used for transmission of the reference signal.

The performing transmission of the reference signal may refer to sending the reference signal, or receiving the reference signal. In other words, that the terminal device performs transmission of the reference signal may be that the terminal device sends an uplink reference signal or receives a downlink reference signal.

In an optional implementation, a port for the reference signal includes x ports, where x is an integer greater than or equal to 1. The x ports belong to X ports, where X is an integer greater than or equal to 8. X is associated with the mask information, that is, X is determined based on the mask information.

The port is a reference signal port or an antenna port. For example, the port is a DMRS port.

In an optional implementation, a quantity of orthogonal DMRS ports determined based on the mask information is X, and according to a predefined rule, a quantity of ports that may be used for DMRS transmission is x, where x is less than X. For example, for a DMRS of the first configuration type, a mask length is 6, and a maximum quantity of orthogonal ports that can be supported by a single-symbol DMRS is 12. Only eight ports may be used for DMRS transmission, or only one of the eight ports may be indicated to be used for DMRS transmission. For another example, for a DMRS of the first configuration type, a mask length is 6, and a maximum quantity of orthogonal ports that can be supported by a double-symbol DMRS is 24. Only 26 ports may be used for DMRS transmission, or only one of the 26 ports may be indicated to be used for DMRS transmission.

In an optional implementation, in the x DMRS ports, differences between cyclic shift values corresponding to cyclic shift codes of DMRS ports with adjacent numbers are the same. For example, a difference between cyclic shift values is a. In X-x DMRS ports, a difference between cyclic shift values corresponding to cyclic shift code of any two DMRS ports is b. a is greater than b.

Based on the foregoing implementations, a distance between cyclic shift values used for transmission of the DMRS is the largest, which is applicable to larger delay spread, and helps improve channel measurement precision.

It can be learned that the terminal device may determine, based on the mask information, the X ports that may be used for transmission of the reference signal, and then determine, from the X ports, the x ports that are actually used for transmission of the reference signal. The terminal device may determine the x ports from the X ports via signaling delivered by the network device.

For example, the reference signal is a DMRS, the configuration type indicated by the resource indication information is the first configuration type, a sequence of the DMRS is mapped to one OFDM symbol of a time domain resource, and the terminal device determines that a mask length is 6 based on the first configuration type. In this case, the terminal device determines, based on the first configuration type and the mask length, that a quantity of orthogonal DMRS ports that can be supported and multiplexed is 12, and selects one or more DMRS ports used for transmission of the DMRS from the determined 12 orthogonal DMRS ports.

For example, the reference signal is a DMRS, the configuration type indicated by the resource indication information is the second configuration type, a sequence of the DMRS is mapped to one OFDM symbol of a time domain resource, and the terminal device determines that a mask length is 4 based on the first configuration type. In this case, the terminal device determines, based on the first configuration type and the mask length, that a quantity of orthogonal DMRS ports that can be supported and multiplexed is 8, and determines one or more DMRS ports used for transmission of the DMRS from the determined 8 orthogonal DMRS ports.

In addition, that the terminal device performs transmission of the reference signal on the first physical resource may mean that the terminal device receives the reference signal on the first physical resource or sends the reference signal on the first physical resource. In other words, that the terminal device performs transmission of the reference signal on the first physical resource may be that the terminal device sends an uplink reference signal on the first physical resource or receives a downlink reference signal on the first physical resource.

It can be learned that in embodiments of this application, the first physical resource for transmission of the reference signal is determined based on the resource indication information and the mask information related to the mask length, to help enable a total quantity of scheduled masks to be exactly divided by the mask length regardless of a quantity of resource blocks scheduled by the terminal device, that is, to help enable the scheduled masks to be orthogonal. This helps increase a quantity of orthogonal ports that can be supported while ensuring that the scheduled masks are orthogonal, so as to increase a quantity of terminal devices that can be scheduled.

Embodiments of this application further provide a signal transmission method 200. FIG. 8 is a schematic flowchart of the signal transmission method 200. The signal transmission method 200 may be applied to a network device. The signal transmission method 200 includes but is not limited to the following steps.

S201: The network device sends resource indication information of a reference signal.

The network device may send the resource indication information of the reference signal to a terminal device via higher layer signaling. The higher layer signaling may be DCI, RRC signaling, a MAC CE, or the like.

S202: The network device determines mask information, where the mask information is used to determine one or more of the following information: mask length information, mask length set information, and mask index information. The resource indication information and the mask information are used to determine a first physical resource, or the resource indication information and the mask information are used to determine a mapping between a sequence of the reference signal and the first physical resource.

S203: The network device determines the first physical resource, and performs transmission of the reference signal on the first physical resource.

That the network device performs transmission of the reference signal on the first physical resource may mean that the network device receives the reference signal on the first physical resource or sends the reference signal on the first physical resource. In other words, that the network device performs transmission of the reference signal on the first physical resource may be that the network device receives an uplink reference signal on the first physical resource or sends a downlink reference signal on the first physical resource.

In embodiments of this application, for implementations of S202 and S203, refer to the implementations of the terminal device in S102 and S103. Details are not described again.

In embodiments of this application, the first physical resource for transmission of the reference signal is also determined by the terminal device based on the resource indication information and the mask information related to a mask length, to help enable a total quantity of scheduled masks to be exactly divided by the mask length regardless of a quantity of resource blocks scheduled by the network device, that is, to help enable the scheduled masks to be orthogonal. This helps increase a quantity of orthogonal ports that can be supported while ensuring that the scheduled masks are orthogonal, so as to increase a quantity of terminal devices that can be scheduled.

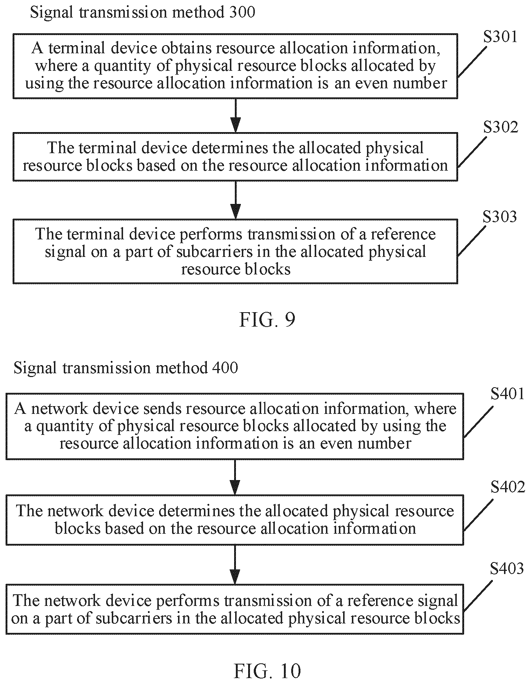

Embodiments of this application further provide a signal transmission method 300. FIG. 9 is a schematic flowchart of the signal transmission method 300. The signal transmission method 300 may be applied to a terminal device. The signal transmission method 300 includes but is not limited to the following steps.

S301: The terminal device obtains resource allocation information, where a quantity of physical resource blocks allocated by using the resource allocation information is even.

The resource allocation information is information indicating a physical resource used for data transmission, or information indicating a physical resource used for reference signal transmission. For example, the resource allocation information indicates a resource block used for data or reference signal transmission, and the resource allocation information is frequency domain resource information for data transmission, or the resource allocation information is time domain resource information for data transmission.

S302: The terminal device determines the allocated physical resource blocks based on the resource allocation information.

The terminal device determines the allocated physical resource blocks from the resource allocation information. The allocated physical resource blocks are physical resource blocks used for transmission of the reference signal.

S303: The terminal device performs transmission of a reference signal on a part of subcarriers in the allocated physical resource blocks.

The performing transmission of the reference signal may refer to sending the reference signal, or receiving the reference signal. In other words, that the terminal device performs transmission of the reference signal on the first physical resource may be that the terminal device sends an uplink reference signal on the first physical resource or receives a downlink reference signal on the first physical resource.

When configuration types of the reference signal are different, mapping modes of the reference signal on a frequency domain resource are different, so that subcarriers to which the reference signal is mapped on a physical resource block are also different. Therefore, the terminal device may determine a part of subcarriers in the allocated physical resource blocks based on the configuration type of the reference signal.

It can be learned that in embodiments of this application, the quantity of allocated physical resource blocks in the resource allocation information obtained by the terminal device is even, so that the terminal device performs transmission of the reference signal on a part of subcarriers in the physical resource blocks whose quantity is even. Therefore, a quantity of masks that are of the reference signal and that are scheduled by the terminal device is even, that is, it is ensured that the masks scheduled by the terminal device are orthogonal.

In another implementation, the terminal device obtains the resource allocation information, and a quantity of physical resource blocks allocated by using the resource allocation information may be even or may be odd. The terminal device determines, based on one or more of the resource allocation information, the resource indication information, the mask information, and the preset rule, a subcarrier used for transmission of the reference signal, where a total quantity of subcarriers used for transmission of the reference signal is an integer multiple of a mask length. For example, it is determined, based on the resource allocation information, the resource indication information, and the mask information, to perform transmission of the reference signal on a first subcarrier group, and it is determined, according to a preset rule, to perform transmission of the reference signal on a second subcarrier group, where a quantity of subcarriers included in the second subcarrier group is less than a quantity of subcarriers included in the first subcarrier group. For example, transmission of the reference signal is not performed on one or more subcarriers with a highest number in a common physical resource block with a highest number. For another example, transmission of the reference signal is not performed on one or more subcarriers with a lowest number in a common physical resource block with a lowest number.

Embodiments of this application further provide a signal transmission method 400. FIG. 10 is a schematic flowchart of the signal transmission method 400. The signal transmission method 400 may be applied to a network device. The signal transmission method 400 includes but is not limited to the following steps.

S401: The network device sends resource allocation information, where a quantity of physical resource blocks allocated by using the resource allocation information is even.

S402: The network device determines the allocated physical resource blocks based on the resource allocation information.

S403: The network device performs transmission of a reference signal on a part of subcarriers in the allocated physical resource blocks.

The performing transmission of the reference signal may refer to receiving the reference signal, or sending the reference signal. In other words, that the network device performs transmission of the reference signal on the first physical resource may be that the network device receives an uplink reference signal on the first physical resource or sends a downlink reference signal on the first physical resource.

In embodiments of this application, for implementations of S402 and S403, refer to the implementations of the terminal device in S301 to S303. Details are not described again.

It can be learned that in embodiments of this application, the quantity of allocated physical resource blocks in the resource allocation information sent by the network device is even, so that the network device performs transmission of the reference signal on a part of subcarriers in the physical resource blocks whose quantity is even. Therefore, a quantity of masks that are of the reference signal and that are scheduled by the network device is even, that is, it is ensured that the masks scheduled by the network device are orthogonal.

Embodiments of this application further provide a signal transmission method 500. In the signal transmission method 500, a terminal device determines a configuration type of a reference signal based on higher layer signaling delivered by a network device. When the terminal device determines, based on the higher layer signaling, that the configuration type of the reference signal is a "first configuration type", and an indicated comb or a default comb is 4, the terminal device determines that the "first configuration type" is the "third configuration type" in 3.3. Therefore, the terminal device determines that a mask length is 2, and a mapping relationship between a sequence of the reference signal and a first physical resource is: $k = 8 \cdot n + 4k' + \Delta$, where $k' = 0, 1$, $n$ is an integer greater than or equal to 0, and $\Delta$ is a group number of a code-division multiplexing CDM group. The first physical resource is a physical resource used for transmission of the reference signal. The terminal device determines the first physical resource based on the mapping relationship between the sequence of the reference signal and the first physical resource, and performs transmission of the reference signal on the first physical resource.

It can be learned from FIG. 5 that when the reference signal is a DMRS, a single-symbol DMRS can support multiplexing of eight orthogonal DMRS ports, and a double-symbol DMRS of a third configuration type can support multiplexing of 16 orthogonal DMRS ports. When the comb of the "first configuration type" in this manner is 4, in comparison with the "first configuration type" whose comb is 2, a quantity of orthogonal DMRS ports that can be supported is doubled, thereby increasing a quantity of terminal devices that can be scheduled.

In an optional implementation, when the terminal device determines, based on the higher layer signaling, that the configuration type of the reference signal is a first configuration type, and an indicated comb or a default comb is 2, the terminal device determines that the "first configuration type" is the "first configuration type" in 3.1. In this case, a mask length is 2, and the terminal device determines, based on a mapping relationship between a sequence of the reference signal and the first physical resource in a current protocol, the first physical resource used for transmission of the reference signal and performs transmission of the reference signal on the first physical resource.

Optionally, when the terminal device determines that the comb of the "first configuration type" is 2, a frequency domain mapping relationship between a DMRS sequence and the first physical resource is $k = N \cdot K \cdot n + N \cdot k' + \Delta$; or when the terminal device determines that the comb of the "first configuration type" is 4, a frequency domain mapping relationship between a DMRS sequence and the first physical resource is $k = N \cdot K \cdot n + N \cdot k' + \Delta$. N is a comb value, $k' = 0, 1$, n is an integer greater than or equal to 0, and $\Delta$ is a group number of a code-division multiplexing CDM group.

In still another optional implementation, when determining that the configuration type of the reference signal is a second configuration type based on the higher layer signaling, the terminal device determines mask information, where the mask information is used to determine one or more of the following information: mask length information, mask length set information, and mask index information. Further, the terminal device determines, based on the second configuration type and the mask information, the first physical resource used for transmission of the reference signal and performs transmission of the reference signal on the first physical resource.

An implementation in which the terminal device determines the mask information is the same as the determining manner in the signal transmission method 100. For example, if the configuration type of the reference signal is the second configuration type, the terminal device determines that a mask length is 2 or 4. For another example, if the configuration type of the reference signal is the second configuration type, the terminal device determines that a mask length set is a second set, where the second set includes one or more of 2 and 4, and the terminal device determines a mask length from the second set based on a mask index indicated by the higher layer. For another example, the terminal device determines that the mask length set is {2, 4} based on first signaling delivered by the network device, and the terminal device determines the mask length from a fifth set based on a mask index indicated by the higher layer.

In other words, when determining that the configuration type of the reference signal is the second configuration type, the terminal device may determine the mask length from a plurality of candidate mask lengths, to determine a mapping between a sequence of the reference signal and the first physical resource based on the mask length, and further determine the first physical resource based on the mapping relationship. It can be learned from the signal transmission method 100 that when the configuration type of the reference signal is the second configuration type, and the mask length is 4, it can be ensured that masks scheduled by the terminal device are all orthogonal, so that a quantity of terminal devices that can be scheduled can be increased while ensuring that the scheduled masks are orthogonal.

In embodiments of this application, the network device may also perform the operations performed by the terminal device in the signal transmission method 100. Details are not described again.

IV. Apparatus embodiment.

To implement functions in the method provided in embodiments of this application, the terminal device and the network device may include a hardware structure and/or a software module, and the foregoing functions are implemented in a form of a hardware structure, a software module, or a combination of a hardware structure and a software module. Whether a function in the foregoing functions is performed by using the hardware structure, the software module, or the combination of the hardware structure and the software module depends on particular applications and design constraints of the technical solutions.

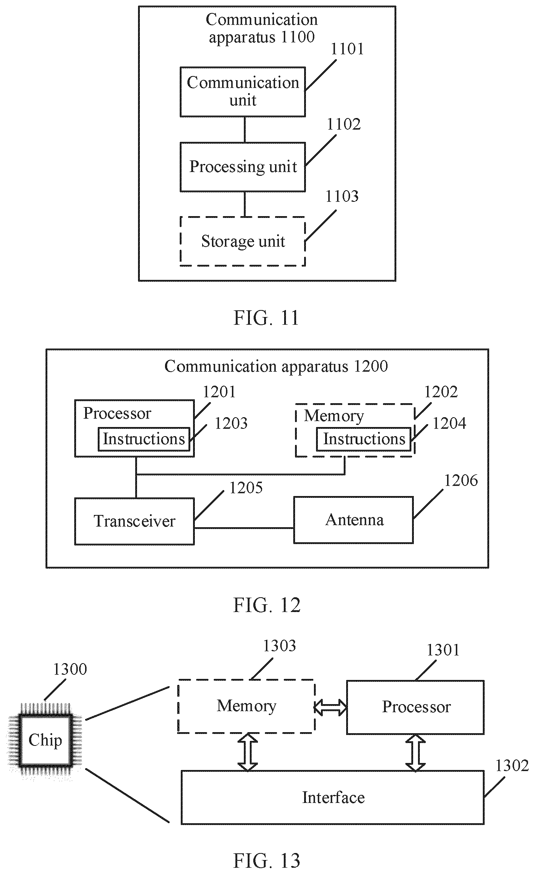

FIG. 11 shows a communication apparatus 1100 according to an embodiment of this application. The communication apparatus 1100 may be a component (for example, an integrated circuit or a chip) of a terminal device, or may be a component (for example, an integrated circuit or a chip) of a network device. Alternatively, the communication apparatus 1100 may be another communication unit, configured to implement the method in the method embodiments of this application. The communication apparatus 1100 may include a communication unit 1101 and a processing unit 1102. Optionally, the communication apparatus may further include a storage unit 1103.

In a possible design, one or more units in FIG. 11 may be implemented by one or more processors, or one or more processors and memories; or may be implemented by one or more processors and transceivers; or may be implemented by one or more processors, memories, and transceivers. This is not limited in embodiments of this application. The processor, the memory, and the transceiver may be disposed separately, or may be integrated.

The communication apparatus 1100 has a function of implementing the terminal device or the network device described in embodiments of this application. For example, the communication apparatus 1100 includes a module, a unit, or a means (means) corresponding to a terminal device performing the steps related to the terminal device described in embodiments of this application. The function, the unit, or the means (means) may be implemented by software or hardware, may be implemented by hardware executing corresponding software, or may be implemented by a combination of software and hardware. For details, further refer to the corresponding descriptions in the foregoing corresponding method embodiments.

In a possible design, the communication apparatus 1100 may include: a processing unit 1102 and a communication unit 1101. The communication unit 1101 is configured to receive and send data/signaling.

The communication unit 1101 is configured to receive resource indication information of a reference signal.

The processing unit 1102 is configured to determine mask information, where the mask information is used to determine one or more of the following information: mask length information, mask length set information, and mask index information; and

the resource indication information and the mask information are used to determine a first physical resource, or the resource indication information and the mask information are used to determine a mapping between a sequence of the reference signal and the first physical resource.

The processing unit 1102 is further configured to determine the first physical resource, and perform transmission of the reference signal on the first physical resource.

In an optional implementation, when determining the mask information, the processing unit 1102 is specifically configured to: receive first signaling, and determine the mask information based on the first signaling; or determine the mask information according to a preset rule; or pre-specify a value of at least one piece of information in the mask information.

In an optional implementation, the first signaling includes a first configuration parameter, and the first configuration parameter indicates the mask information; and/or the first signaling does not include a first configuration parameter, and a value of the mask information is a default value.

In another optional implementation, that the processing unit 1102 determines the mask information according to the preset rule includes: determining a configuration type of the reference signal based on the resource indication information of the reference signal; and determining the mask information based on the configuration type of the reference signal.

In an optional implementation, the mask length information is a mask length; and the configuration type of the reference signal and the mask length information meet one or more of the following: when the configuration type is a first configuration type, the mask length is 2, 3, or 6; when the configuration type is a second configuration type, the mask length is 2 or 4; and when the configuration type is a third configuration type, the mask length is 2 or 3.

In another optional implementation, the mask length set information is a mask length set; and the configuration type of the reference signal and the mask length set information meet one or more of the following: when the configuration type is a first configuration type, the mask length set is a first set; when the configuration type is a second configuration type, the mask length set is a second set; and when the configuration type is a third configuration type, the mask length set is a third set.

In an optional implementation, the first set includes one or more of 2, 3, and 6; or the second set includes one or more of 2 and 4; or the third set includes one or more of 2 and 3.

In an optional implementation, different configuration types of the reference signal correspond to different mask lengths; and/or a quantity of elements included in the first set is different from a quantity of elements included in the second set.

In another optional implementation, the first signaling indicates a fifth set, and the mask length set is the fifth set; and the fifth set is {2, 3, 4, 6, 8}; or the fifth set is {1, 2, 3, 4, 5, 6}; or the fifth set is {1, 2, 3, 4, 5, 6, 7, 8}.

In an optional implementation, a mask length set of a reference signal for a first channel is a fourth set; a mask length set of a reference signal for a second channel is a sixth set; the first channel and the second channel are different channels; and the fourth set and the sixth set are different sets.

The first channel includes one or more of the following: a physical uplink shared channel, a physical uplink control channel, a physical downlink shared channel, a physical downlink control channel, and a physical broadcast channel.

The second channel includes one or more of the following: a physical uplink shared channel, a physical uplink control channel, a physical downlink shared channel, a physical downlink control channel, and a physical broadcast channel.

In an optional implementation, the mapping between the sequence of the reference signal and the first physical resource meets at least one of the following:

when the configuration type is the first configuration type, $k=2K \cdot n+2k'+\Delta$;
when the configuration type is the second configuration type, $k=(4+K) \cdot n+k'+\Delta$; and
when the configuration type is the third configuration type, $k=4K \cdot n+4k'+\Delta$.

$k$ is a frequency domain resource index in the first physical resource, $K$ is the mask length, $k'=0,1,...,K-1$, $\Delta$ is a group number of a code-division multiplexing CDM group, and $n$ is an integer greater than or equal to 0.

In an optional implementation, a port for the reference signal includes x ports, where x is an integer greater than or equal to 1; the x ports belong to X ports, where X is an integer greater than or equal to 8; and X is associated with the mask information.

In an optional implementation, the communication unit 1101 may be further configured to send first reporting information to a network device, where the first reporting information indicates mask information supported by the terminal device.

In another possible design, the communication apparatus 1100 may include: a processing unit 1102 and a communication unit 1101. The communication unit 1101 is configured to receive and send data/signaling.

The processing unit 1102 is configured to obtain resource allocation information, where a quantity of physical resource blocks allocated by using the resource allocation information is even.

The processing unit 1102 is further configured to determine the allocated physical resource blocks based on the resource allocation information.

The communication unit 1101 is further configured to perform transmission of a reference signal on a part of subcarriers in the allocated physical resource blocks.

In still another possible design, the communication apparatus 1100 may include: a processing unit 1102 and a communication unit 1101. The communication unit 1101 is configured to receive and send data/signaling.

The communication unit 1101 is configured to send resource indication information of a reference signal.

The processing unit 1102 is configured to determine mask information, where the mask information is used to determine one or more of the following information: mask length information, mask length set information, and mask index information; and

the resource indication information and the mask information are used to determine a first physical resource, or the resource indication information and the mask information are used to determine a mapping between a sequence of the reference signal and the first physical resource.

The processing unit 1102 is further configured to determine the first physical resource, and perform transmission of the reference signal on the first physical resource.

In an optional implementation, when determining the mask information, the processing unit 1102 is specifically configured to: send first signaling, and determine the mask information based on the first signaling; or determine the mask information according to a preset rule; or pre-specify a value of at least one piece of information in the mask information.

In an optional implementation, the first signaling includes a first configuration parameter, and the first configuration parameter indicates the mask information; and/or the first signaling does not include a first configuration parameter, and a value of the mask information is a default value.

In an optional implementation, that the processing unit 1102 determines the mask information according to the preset rule includes: determining a configuration type of the reference signal based on the resource indication information of the reference signal; and determining the mask information based on the configuration type of the reference signal.

In an optional implementation, the mask length information is a mask length; and the configuration type of the reference signal and the mask length information meet one or more of the following:

when the configuration type is a first configuration type, the mask length is 2, 3, or 6; when the configuration type is a second configuration type, the mask length is 2 or 4; and when the configuration type is a third configuration type, the mask length is 2 or 3.

In an optional implementation, the mask length set information is a mask length set; and the configuration type of the reference signal and the mask length set information meet one or more of the following:

when the configuration type is a first configuration type, the mask length set is a first set; when the configuration type of the reference signal is a second configuration type, the mask length set is a second set; and when the configuration type is a third configuration type, the mask length set is a third set.

In an optional implementation, the first set includes one or more of 2, 3, and 6; or the second set includes one or more of 2 and 4; or the third set includes one or more of 2 and 3.

In an optional implementation, different configuration types of the reference signal correspond to different mask lengths; and/or a quantity of elements included in the first set is different from a quantity of elements included in the second set.

In an optional implementation, the first signaling indicates a fifth set, and the mask length set is the fifth set; and the fifth set is {2, 3, 4, 6, 8}; or the fifth set is {1, 2, 3, 4, 5, 6}; or the fifth set is {1, 2, 3, 4, 5, 6, 7, 8}.

In an optional implementation, a mask length set of a reference signal for a first channel is a fourth set; a mask length set of a reference signal for a second channel is a sixth set; the first channel and the second channel are different channels; and the fourth set and the sixth set are different sets.

The first channel includes one or more of the following: a physical uplink shared channel, a physical uplink control channel, a physical downlink shared channel, a physical downlink control channel, and a physical broadcast channel.

The second channel includes one or more of the following: a physical uplink shared channel, a physical uplink control channel, a physical downlink shared channel, a physical downlink control channel, and a physical broadcast channel.

In an optional implementation, the mapping between the sequence of the reference signal and the first physical resource meets at least one of the following:

when the configuration type is the first configuration type, $k=2K \cdot n+2k'+\Delta$;

when the configuration type is the second configuration type, $k=(4+K) \cdot n+k'+\Delta$; and

when the configuration type is the third configuration type, $k = 4K \cdot n+4k'+\Delta$.

$k$ is a frequency domain resource index in the first physical resource, $K$ is the mask length, $k' = 0,1,...,K-1$, $\Delta$ is a group number of a code-division multiplexing CDM group, and $n$ is an integer greater than or equal to 0.

In an optional implementation, a port for the reference signal includes x ports, where x is an integer greater than or equal to 1; the x ports belong to X ports, where X is an integer greater than or equal to 8; and X is associated with the mask information.

In an optional implementation, the communication unit 1101 is further configured to receive first reporting information from a terminal device, where the first reporting information indicates mask information supported by the terminal device.

In still another possible design, the communication apparatus 1100 may include: a processing unit 1102 and a communication unit 1101. The communication unit 1101 is configured to receive and send data/signaling.

The processing unit 1102 is configured to send resource allocation information, where a quantity of physical resource blocks allocated by using the resource allocation information is even.

The processing unit 1102 is further configured to determine the allocated physical resource blocks based on the resource allocation information.

The communication unit 1101 is configured to perform transmission of a reference signal on a part of subcarriers in the allocated physical resource blocks.

Embodiments of this application and the foregoing method embodiment are based on a same concept, and bring same technical effects. For a specific principle, refer to the descriptions of the foregoing embodiments. Details are not described again.

Embodiments of this application further provide a communication apparatus 1200. FIG. 12 is a diagram of a structure of the communication apparatus 1200. The communication apparatus 1200 may be a terminal device or may be a chip, a chip system, a processor, or the like that supports the terminal device in implementing the method, or may be a network device or may be a chip, a chip system, a processor, or the like that supports the network device in implementing the method. The apparatus may be configured to implement the method described in the foregoing method embodiments. For details, refer to the descriptions in the foregoing method embodiments.

The communication apparatus 1200 may include one or more processors 1201. The processor 1201 may be a general-purpose processor, a dedicated processor, or the like. For example, the processor may be a baseband processor, a digital signal processor, an application-specific integrated circuit, a field programmable gate array or another programmable logic device, a discrete gate or a transistor logic device, a discrete hardware component, or a central processing unit (central processing unit, CPU). The baseband processor may be configured to process a communication protocol and communication data. The central processing unit may be configured to: control the communication apparatus (for example, a base station, a baseband chip, a terminal, a terminal chip, a distributed unit (distributed unit, DU), or a central unit (central unit, CU)), execute a software program, and process data of the software program.

Optionally, the communication apparatus 1200 may include one or more memories 1202. The memory may store instructions 1204, and the instructions may be run on the processor 1201, so that the communication apparatus 1200 performs the methods described in the foregoing method embodiments. Optionally, the memory 1202 may further store data. The processor 1201 and the memory 1202 may be separately disposed, or may be integrated together.

The memory 1202 may include but is not limited to a non-volatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a ROM, or a portable read-only memory (Compact Disc Read-Only Memory, CD-ROM).

Optionally, the communication apparatus 1200 may further include a transceiver 1205 and an antenna 1206. The transceiver 1205 may be referred to as a transceiver unit, a transceiver, a transceiver circuit, or the like, and is configured to implement receiving and sending functions. The transceiver 1205 may include a receiver and a transmitter. The receiver may be referred to as a receiving machine, a receiver circuit, or the like, and is configured to implement a receiving function. The transmitter may be referred to as a sending machine, a sending circuit, or the like, and is configured to implement a sending function.

The communication apparatus 1200 is the terminal device. The processor 1201 is configured to perform S102 and S103 in the signal transmission method 100, and is configured to perform S302 and S303 in the signal transmission method 300. The transceiver 1205 is configured to perform S101 in the signal transmission method 100, and is configured to perform S301 in the signal transmission method 300.

The communication apparatus 1200 is the network device. The processor 1201 is configured to perform S202 and S203 in the signal transmission method 200, and is configured to perform S402 and S403 in the signal transmission method 400. The transceiver 1205 is configured to perform S201 in the signal transmission method 200, and is configured to perform S401 in the signal transmission method 400.

In another possible design, the processor 1201 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 1201 may store instructions 1203. When the instructions 1203 are run on the processor 1201, the communication apparatus 1200 may be enabled to perform the methods described in the foregoing method embodiments. The instructions 1203 may be fixed in the processor 1201. In this case, the processor 1201 may be implemented by hardware.

In another possible design, the communication apparatus 1200 may include a circuit, and the circuit may implement the sending, receiving, or communication function in the foregoing method embodiments. The processor and the transceiver described in embodiments of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an nMetal-oxide-semiconductor (nMetal-oxide-semiconductor, NMOS), a positive channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The communication apparatus described in the foregoing embodiments may be the terminal device or the network device. However, a scope of the communication apparatus described in embodiments of this application is not limited thereto, and a structure of the communication apparatus may not be limited by the structure in FIG. 12. The communication apparatus may be an independent device or may be a part of a large device. For example, the communication apparatus may be:

(1) an independent integrated circuit IC, a chip, or a chip system or subsystem;
(2) a set that has one or more ICs, where optionally, the IC set may alternatively include a storage component configured to store data and instructions;
(3) an ASIC, like a modem (modulator); and
(4) a module that can be embedded in another device.

When the communication apparatus may be the chip or the chip system, refer to a diagram of a structure of a chip, namely, FIG. 13. The chip 1300 shown in FIG. 13 includes a processor 1301 and an interface 1302. There may be one or more processors 1301, and there may be a plurality of interfaces 1302. The processor 1301 may be a logic circuit, and the interface 1302 may be an input/output interface, an input interface, or an output interface. The chip 1300 may further include a memory 1303.

In a design, for a case in which the chip is configured to implement functions of the terminal device in embodiments of this application:

The interface 1302 is configured to receive resource indication information of a reference signal.

The processor 1301 is configured to determine mask information, where the mask information is used to determine one or more of the following information: mask length information, mask length set information, and mask index information; and

the resource indication information and the mask information are used to determine a first physical resource, or the resource indication information and the mask information are used to determine a mapping between a sequence of the reference signal and the first physical resource.

The processor 1301 is further configured to determine the first physical resource, and perform transmission of the reference signal on the first physical resource.

In another design, for a case in which the chip is configured to implement functions of the terminal device in embodiments of this application:

The processor 1301 is configured to obtain resource allocation information, where a quantity of physical resource blocks allocated by using the resource allocation information is even.

The processor 1301 is further configured to determine the allocated physical resource blocks based on the resource allocation information.

The interface 1302 is configured to perform transmission of a reference signal on a part of subcarriers in the allocated physical resource blocks.

In a design, for a case in which the chip is configured to implement functions of the network device in embodiments of this application:

The interface 1302 is configured to send resource indication information of a reference signal.

The processor 1301 is configured to determine mask information, where the mask information is used to determine one or more of the following information: mask length information, mask length set information, and mask index information; and

the resource indication information and the mask information are used to determine a first physical resource, or the resource indication information and the mask information are used to determine a mapping between a sequence of the reference signal and the first physical resource.

The processor 1301 is further configured to determine the first physical resource, and perform transmission of the reference signal on the first physical resource.

In another design, for a case in which the chip is configured to implement functions of the network device in embodiments of this application:

The processor 1301 is configured to send resource allocation information, where a quantity of physical resource blocks allocated by using the resource allocation information is even.

The processor 1301 is further configured to determine the allocated physical resource blocks based on the resource allocation information.

The interface 1302 is configured to perform transmission of a reference signal on a part of subcarriers in the allocated physical resource blocks.

In embodiments of this application, the communication apparatus 1200 and the chip 1300 may further perform the implementations described in the communication apparatus 1100. A person skilled in the art may further understand that various illustrative logical blocks (illustrative logic block) and steps (step) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the scope of embodiments of this application.

Embodiments of this application are based on a same concept as the method embodiments shown in the signal transmission method 100 to the signal transmission method 500, and bring a same technical effect. For a specific principle, refer to the descriptions of embodiments shown in the signal transmission method 100 to the signal transmission method 500. Details are not described again.

This application further provides a computer-readable storage medium, configured to store computer software instructions. When the instructions are executed by a communication apparatus, the function in any one of the foregoing method embodiments is implemented.

This application further provides a computer program product, configured to store computer software instructions. When the instructions are executed by a communication apparatus, the function in any one of the foregoing method embodiments is implemented.

This application further provides a computer program. When the computer program is run on a computer, the function of any one of the foregoing method embodiments is implemented.

This application further provides a communication system. The system includes one or more network devices and one or more terminal devices. In another possible design, the system may further include another device that interacts with the network device and the terminal device in the solutions provided in this application.

All or some of the foregoing embodiments may be implemented by using software, hardware, firmware, or any combination thereof. When software is used to implement embodiments, embodiments may be implemented completely or partially in a form of a computer program product. The computer program product includes one or more computer instructions. When the computer instructions are loaded and executed on the computer, the procedure or functions according to embodiments of this application are all or partially generated. The computer may be a general purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, including one or more usable media. The usable medium may be a magnetic medium (for example, a floppy disk, a hard disk, or a magnetic tape), an optical medium (for example, a high-density digital video disc (digital video disc, DVD)), a semiconductor medium (for example, an SSD), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A signal transmission method, wherein the method comprises:

receiving resource indication information of a reference signal;

determining mask information, wherein the mask information is used to determine one or more of the following information: mask length information, mask length set information, and mask index information; and

the resource indication information and the mask information are used to determine a first physical resource, or the resource indication information and the mask information are used to determine a mapping between a sequence of the reference signal and the first physical resource; and

determining the first physical resource, and performing transmission of the reference signal on the first physical resource.

2. The method according to claim 1, wherein the determining mask information comprises:

receiving first signaling, and determining the mask information based on the first signaling; or

determining the mask information according to a preset rule; or

pre-specifying a value of at least one piece of information in the mask information.

3. The method according to claim 2, wherein

the first signaling comprises a first configuration parameter, and the first configuration parameter indicates the mask information; and/or

the first signaling does not comprise a first configuration parameter, and a value of the mask information is a default value.

4. The method according to claim 2, wherein the determining the mask information according to a preset rule comprises:

determining a configuration type of the reference signal based on the resource indication information of the reference signal; and

determining the mask information based on the configuration type of the reference signal.

5. The method according to claim 4, wherein

the mask length information is a mask length; and

the configuration type of the reference signal and the mask length information meet one or more of the following:

when the configuration type is a first configuration type, the mask length is 2, 3, or 6;

when the configuration type is a second configuration type, the mask length is 2 or 4; and

when the configuration type is a third configuration type, the mask length is 2 or 3.

6. The method according to claim 4, wherein

the mask length set information is a mask length set; and

the configuration type of the reference signal and the mask length set information meet one or more of the following:

when the configuration type is a first configuration type, the mask length set is a first set;

when the configuration type is a second configuration type, the mask length set is a second set; and

when the configuration type is a third configuration type, the mask length set is a third set.

7. The method according to claim 6, wherein

the first set comprises one or more of 2, 3, and 6; or

the second set comprises one or more of 2 and 4; or

the third set comprises one or more of 2 and 3.

8. The method according to claim 6 or 7, wherein

different configuration types of the reference signal correspond to different mask lengths; and/or

a quantity of elements comprised in the first set is different from a quantity of elements comprised in the second set.

9. The method according to claim 2, wherein

the first signaling indicates a fifth set, and a mask length set is the fifth set; and
the fifth set is {2, 3, 4, 6, 8}; or
the fifth set is {1, 2, 3, 4, 5, 6}; or
the fifth set is {1, 2, 3, 4, 5, 6, 7, 8}.

10. The method according to any one of claims 1 to 9, wherein

a mask length set of a reference signal for a first channel is a fourth set;
a mask length set of a reference signal for a second channel is a sixth set;
the first channel and the second channel are different channels;
the fourth set and the sixth set are different sets;
the first channel comprises one or more of the following: a physical uplink shared channel, a physical uplink control channel, a physical downlink shared channel, a physical downlink control channel, and a physical broadcast channel; and
the second channel comprises one or more of the following: a physical uplink shared channel, a physical uplink control channel, a physical downlink shared channel, a physical downlink control channel, and a physical broadcast channel.

11. The method according to any one of claims 1 to 10, wherein the mapping between the sequence of the reference signal and the first physical resource meets at least one of the following:

when the configuration type is the first configuration type, $k = 2K \cdot n + 2k' + \Delta$;
when the configuration type is the second configuration type, $k = (4+K) \cdot n + k' + \Delta$; and
when the configuration type is the third configuration type, $k = 4K \cdot n + 4k' + \Delta$, wherein
$k$ is a frequency domain resource index in the first physical resource, $K$ is the mask length, $k' = 0,1,...,K-1$, $\Delta$ is a group number of a code-division multiplexing CDM group, and $n$ is an integer greater than or equal to 0.

12. The method according to any one of claims 1 to 11, wherein

a port for the reference signal comprises x ports, wherein x is an integer greater than or equal to 1;
the x ports belong to X ports, wherein X is an integer greater than or equal to 8; and
X is associated with the mask information.

13. The method according to any one of claims 1 to 12, wherein the method further comprises:
sending first reporting information to a network device, wherein the first reporting information indicates mask information supported by a terminal device.

14. A signal transmission method, wherein the method comprises:

obtaining resource allocation information, wherein a quantity of physical resource blocks allocated by using the resource allocation information is even;
determining the allocated physical resource blocks based on the resource allocation information; and
performing transmission of a reference signal on a part of subcarriers in the allocated physical resource blocks.

15. A signal transmission method, wherein the method comprises:

sending resource indication information of a reference signal;
determining mask information, wherein the mask information is used to determine one or more of the following information: mask length information, mask length set information, and mask index information; and
the resource indication information and the mask information are used to determine a first physical resource, or the resource indication information and the mask information are used to determine a mapping between a sequence of the reference signal and the first physical resource; and
determining the first physical resource, and performing transmission of the reference signal on the first physical resource.

16. The method according to claim 15, wherein the determining mask information comprises:

sending first signaling, and determining the mask information based on the first signaling; or
determining the mask information according to a preset rule; or
pre-specifying a value of at least one piece of information in the mask information.

17. The method according to claim 16, wherein

the first signaling comprises a first configuration parameter, and the first configuration parameter indicates the mask information; and/or
the first signaling does not comprise a first configuration parameter, and a value of the mask information is a default value.

18. The method according to claim 16, wherein the determining the mask information according to a preset rule comprises:

determining a configuration type of the reference signal based on the resource indication information of the reference signal; and
determining the mask information based on the configuration type of the reference signal.

19. The method according to claim 18, wherein

the mask length information is a mask length; and
the configuration type of the reference signal and the mask length information meet one or more of the following:

when the configuration type is a first configuration type, the mask length is 2, 3, or 6;
when the configuration type is a second configuration type, the mask length is 2 or 4; and
when the configuration type is a third configuration type, the mask length is 2 or 3.

20. The method according to claim 18, wherein

the mask length set information is a mask length set; and
the configuration type and the mask length set information meet one or more of the following:

when the configuration type is a first configuration type, the mask length set is a first set;
when the configuration type is a second configuration type, the mask length set is a second set; and
when the configuration type is a third configuration type, the mask length set is a third set.

21. The method according to claim 20, wherein

the first set comprises one or more of 2, 3, and 6; or
the second set comprises one or more of 2 and 4; or
the third set comprises one or more of 2 and 3.

22. The method according to any one of claims 18 to 21, wherein

different configuration types of the reference signal correspond to different mask lengths; and/or
a quantity of elements comprised in the first set is different from a quantity of elements comprised in the second set.

23. The method according to claim 17, wherein

the first signaling indicates a fifth set, and the mask length set is the fifth set; and
the fifth set is {2, 3, 4, 6, 8}; or
the fifth set is {1, 2, 3, 4, 5, 6}; or
the fifth set is {1, 2, 3, 4, 5, 6, 7, 8}.

24. The method according to any one of claims 16 to 23, wherein

a mask length set of a reference signal for a first channel is a fourth set;

a mask length set of a reference signal for a second channel is a sixth set;

the first channel and the second channel are different channels;

the fourth set and the sixth set are different sets;

the first channel comprises one or more of the following: a physical uplink shared channel, a physical uplink control channel, a physical downlink shared channel, a physical downlink control channel, and a physical broadcast channel; and

the second channel comprises one or more of the following: a physical uplink shared channel, a physical uplink control channel, a physical downlink shared channel, a physical downlink control channel, and a physical broadcast channel.

25. The method according to any one of claims 16 to 24, wherein the mapping between the sequence of the reference signal and the first physical resource meets at least one of the following:

when the configuration type is the first configuration type, $k = 2K \cdot n + 2k' + \Delta$;

when the configuration type is the second configuration type, $k = (4+K) \cdot n + k' + \Delta$; and

when the configuration type is the third configuration type, $k = 4K \cdot n + 4k' + \Delta$, wherein

$k$ is a frequency domain resource index in the first physical resource, $K$ is the mask length, $k' = 0,1,...,K-1$, $\Delta$ is a group number of a code-division multiplexing CDM group, and $n$ is an integer greater than or equal to 0.

26. A signal transmission method, wherein the method comprises:

sending resource allocation information, wherein a quantity of physical resource blocks allocated by using the resource allocation information is even;

determining the allocated physical resource blocks based on the resource allocation information; and

performing transmission of a reference signal on a part of subcarriers in the allocated physical resource blocks.

27. A communication apparatus, wherein the apparatus comprises:

a communication unit, configured to receive resource indication information of a reference signal; and

a processing unit, configured to determine mask information, wherein the mask information is used to determine one or more of the following information: mask length information, mask length set information, and mask index information; and

the resource indication information and the mask information are used to determine a first physical resource, or the resource indication information and the mask information are used to determine a mapping between a sequence of the reference signal and the first physical resource, wherein

the processing unit is further configured to determine the first physical resource, and perform transmission of the reference signal on the first physical resource.

28. A communication apparatus, wherein the apparatus comprises:

a communication unit, configured to send resource indication information of a reference signal; and

a processing unit, configured to determine mask information, wherein the mask information is used to determine one or more of the following information: mask length information, mask length set information, and mask index information; and

the resource indication information and the mask information are used to determine a first physical resource, or the resource indication information and the mask information are used to determine a mapping between a sequence of the reference signal and the first physical resource, wherein

the processing unit is further configured to determine the first physical resource, and perform transmission of the reference signal on the first physical resource.

29. A communication apparatus, comprising a processor and a transceiver, wherein the transceiver is configured to communicate with another communication apparatus, and the processor is configured to run a program, to enable the communication apparatus to implement the method according to any one of claims 1 to 13, implement the method according to claim 14, implement the method according to any one of claims 15 to 25, or implement the method according to claim 26.

30. A computer-readable storage medium, wherein the computer-readable storage medium is configured to store instructions, and when the instructions are run on a computer, the method according to any one of claims 1 to 13 is performed, the method according to claim 14 is performed, the method according to any one of claims 15 to 25 is performed, or the method according to claim 26 is performed.

Network
device

Terminal
device

Terminal
device

FIG. 1

Transmit end                          Receive end

FIG. 2

FIG. 3(a)

FIG. 3(b)

FIG. 4(a)

FIG. 4(b)

FIG. 5

FIG. 6

Signal transmission method 100                               S101

A terminal device receives resource indication information of a reference signal

The terminal device determines mask information, where the mask information is used to determine one or more of the following information: mask length information, mask length set information, and mask index information, and the resource indication information and the mask information are used to determine a first physical resource, or the resource indication information and the mask information are used to determine a mapping between a sequence of the reference signal and the first physical resource      S102

S103

The terminal device determines the first physical resource, and performs transmission of the reference signal on the first physical resource

FIG. 7

Signal transmission method 200                               S201

A network device sends resource indication information of a reference signal

The network device determines mask information, where the mask information is used to determine one or more of the following information: mask length information, mask length set information, and mask index information, and the resource indication information and the mask information are used to determine a first physical resource, or the resource indication information and the mask information are used to determine a mapping between a sequence of the reference signal and the first physical resource      S202

S203

The network device determines the first physical resource, and performs transmission of the reference signal on the first physical resource

FIG. 8

Signal transmission method 300

A terminal device obtains resource allocation information, where a quantity of physical resource blocks allocated by using the resource allocation information is an even number
S301

↓

The terminal device determines the allocated physical resource blocks based on the resource allocation information
S302

↓

The terminal device performs transmission of a reference signal on a part of subcarriers in the allocated physical resource blocks
S303

FIG. 9

Signal transmission method 400

A network device sends resource allocation information, where a quantity of physical resource blocks allocated by using the resource allocation information is an even number
S401

↓

The network device determines the allocated physical resource blocks based on the resource allocation information
S402

↓

The network device performs transmission of a reference signal on a part of subcarriers in the allocated physical resource blocks
S403

FIG. 10

Communication
apparatus 1100

Communication
unit — 1101

Processing unit — 1102

Storage unit — 1103

FIG. 11

Communication apparatus 1200

Processor — 1201
Instructions — 1203

Memory — 1202
Instructions — 1204

Transceiver — 1205

Antenna — 1206

FIG. 12

1303

1301

1300

Chip

Memory

Processor

Interface — 1302

FIG. 13

| INTERNATIONAL SEARCH REPORT | International application No. |
|---|---|
| | **PCT/CN2023/090804** |

**A. CLASSIFICATION OF SUBJECT MATTER**

H04L5/00(2006.01)i;H04W74/08(2009.01)i;H04W72/04(2023.01)i

According to International Patent Classification (IPC) or to both national classification and IPC

**B. FIELDS SEARCHED**

Minimum documentation searched (classification system followed by classification symbols)

IPC: H04L,H04W

Documentation searched other than minimum documentation to the extent that such documents are included in the fields searched

Electronic data base consulted during the international search (name of data base and, where practicable, search terms used)

CNABS, CNTXT, VEN, USTXT, WOTXT, EPTXT, CNKI, 3GPP: 掩码, 长度, 参考信号, 序列, 物理资源, 映射, 偶数, 配置类型, DMRS, PRB, OCC, CS, configuration type, mask, length, sequence, SN

**C. DOCUMENTS CONSIDERED TO BE RELEVANT**

| Category* | Citation of document, with indication, where appropriate, of the relevant passages | Relevant to claim No. |
|---|---|---|
| X | CN 107294691 A (BEIJING SAMSUNG TELECOM R&D CENTER et al.) 24 October 2017 (2017-10-24)<br>   description, paragraphs [0242]-[0278] | 14, 26, 29-30 |
| A | WO 2018170842 A1 (GUANGDONG OPPO MOBILE TELECOMMUNICATIONS CORP., LTD.) 27 September 2018 (2018-09-27)<br>   description, page 8, line 15-page 11, line 20, and page 21, line 9-page 22, line 17 | 1-13, 15-25, 27-30 |
| A | CN 102781098 A (ZTE CORP.) 14 November 2012 (2012-11-14)<br>   entire document | 1-30 |
| A | CN 103096389 A (HUAWEI TECHNOLOGIES CO., LTD.) 08 May 2013 (2013-05-08)<br>   entire document | 1-30 |
| A | CN 110431818 A (GUANGDONG OPPO MOBILE TELECOMMUNICATIONS CORP., LTD.) 08 November 2019 (2019-11-08)<br>   entire document | 1-30 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 May 2023** | **14 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/090804**

| Patent document cited in search report | | | Publication date (day/month/year) | Patent family member(s) | | | Publication date (day/month/year) |
|---|---|---|---|---|---|---|---|
| CN | 107294691 | A | 24 October 2017 | EP | 3420663 | A1 | 02 January 2019 |
| | | | | EP | 3420663 | A4 | 06 March 2019 |
| WO | 2018170842 | A1 | 27 September 2018 | CA | 3057535 | A1 | 27 September 2018 |
| | | | | AU | 2017404901 | A1 | 17 October 2019 |
| | | | | CN | 110431818 | A | 08 November 2019 |
| | | | | KR | 20190126118 | A | 08 November 2019 |
| | | | | EP | 3605988 | A1 | 05 February 2020 |
| | | | | CN | 111147219 | A | 12 May 2020 |
| | | | | JP | 2020516143 | W | 28 May 2020 |
| | | | | US | 2020252191 | A1 | 06 August 2020 |
| CN | 102781098 | A | 14 November 2012 | WO | 2012152214 | A1 | 15 November 2012 |
| CN | 103096389 | A | 08 May 2013 | EP | 2775759 | A1 | 10 September 2014 |
| | | | | EP | 2775759 | A4 | 22 October 2014 |
| | | | | US | 2014241284 | A1 | 28 August 2014 |
| | | | | WO | 2013067937 | A1 | 16 May 2013 |
| CN | 110431818 | A | 08 November 2019 | RU | 2726155 | C1 | 09 July 2020 |
| | | | | AU | 2017404901 | A1 | 17 October 2019 |
| | | | | KR | 20190126118 | A | 08 November 2019 |
| | | | | KR | 102364119 | B1 | 17 February 2022 |
| | | | | SG | 11201908821 | QA | 30 October 2019 |
| | | | | EP | 3605988 | A1 | 05 February 2020 |
| | | | | EP | 3605988 | A4 | 18 March 2020 |
| | | | | EP | 3605988 | B1 | 12 May 2021 |
| | | | | ES | 2877857 | T3 | 17 November 2021 |
| | | | | US | 2020252191 | A1 | 06 August 2020 |
| | | | | US | 11310019 | B2 | 19 April 2022 |
| | | | | US | 2022200775 | A1 | 23 June 2022 |
| | | | | WO | 2018170842 | A1 | 27 September 2018 |
| | | | | CA | 3057535 | A1 | 27 September 2018 |
| | | | | CA | 3057535 | C | 11 January 2022 |
| | | | | IL | 269573 | B | 01 April 2022 |
| | | | | MX | 2019011339 | A | 12 November 2019 |
| | | | | ZA | 201906962 | B | 27 January 2021 |
| | | | | JP | 2020516143 | A | 28 May 2020 |
| | | | | BR | 112019019822 | A2 | 22 April 2020 |
| | | | | PH | 12019502192 | A1 | 08 June 2020 |
| | | | | EP | 3863258 | A1 | 11 August 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210469122X